# EUROPEAN PATENT SPECIFICATION

(11) **EP 4 224 281 B1**
(45) Date of publication and mention of the grant of the patent: **30.09.2026**
(21) Application number: 21901086.5
(22) Date of filing: 03.12.2021
(51) Int. Cl.: G06F 1/16, G06T 13/40, G06T 19/00, G06Q 50/10, G06T 15/20, G06F 3/0484, G06F 3/0481

(54) **FLEXIBLE ELECTRONIC DEVICE AND AVATAR SERVICE OPERATION METHOD THEREOF**
FLEXIBLE ELEKTRONISCHE VORRICHTUNG UND AVATARDIENSTBETRIEBSVERFAHREN DAFÜR
DISPOSITIF ÉLECTRONIQUE SOUPLE ET PROCÉDÉ D'OPÉRATION DE SERVICE D'AVATAR ASSOCIÉ

(30) Priority: 03.12.2020 KR 20200167459
(43) Date of publication of application: 09.08.2023
(73) Proprietor: Samsung Electronics Co., Ltd., Suwon-si, Gyeonggi-do 16677 (KR)
(72) Inventor: PARK, Miji, Suwon-si, Gyeonggi-do 16677 (KR); KANG, Hyunggwang, Suwon-si, Gyeonggi-do 16677 (KR); OH, Younghak, Suwon-si, Gyeonggi-do 16677 (KR)
(74) Representative: Gulde & Partner
(86) International application number: PCT/KR2021/018272
(87) International publication number: WO 2022/119398

(56) References cited:
- EP-A1- 3 385 819
- EP-A1- 3 700 190
- EP-A1- 3 702 880
- JP-A- 2018 055 418
- KR-A- 20070 058 106
- KR-A- 20170 076 471
- KR-A- 20190 141 518
- KR-A- 20200 101 206
- US-A1- 2019 384 438

## Description

### [Technical Field]

The present invention relates to a flexible electronic device including an expandable display, and a method for operating an avatar thereby.

### [Background Art]

An electronic device may provide an avatar service to a user by photographing an avatar or applying a facial expression, motion, or text to the avatar such that the user may indirectly expresses his/her emotion. For example, avatars are utilized for virtual reality or augmented reality platforms, or online game services.

Meanwhile, in order to satisfy the needs of users who want newer and more diversified functions, electronic devices have evolved into structures for expanding displays or improving the usability of displays. Flexible electronic devices capable of expanding displays in a sliding type or roller type have recently become available.

A flexible electronic device has a flexible display disposed in a space formed by first and second housings, and the flexible display may be expanded or reduced by a sliding movement between the first and second housings. Accordingly, the display area of the display of the flexible electronic device, in which visual information is to be displayed, may be reduced or expanded.

US 2019/384438 A1 discloses an electronic device which includes a first structure capable of moving between a closed state and an open state with regard to a second structure, a second structure, a flexible touchscreen display layer comprising a planar portion and a bendable portion, a processor operatively connected to the flexible touchscreen display layer, and a memory operatively connected to the processor. The memory stores instructions that when executed, enable the processor to perform operations of displaying at least one first object in a first area of the planar portion and displaying at least one second object in a second area of the planar portion in the closed state, and displaying the at least one object in the first area and displaying the at least one second object in a third area of the bendable portion in the open state.

EP 3 700 190 A1 describes an electronic device which includes a camera module, a display, and a processor, wherein the processor is configured to obtain a preview image corresponding to an external object using the camera module;, determine attributes of the external object, based on the obtained preview image, synthesize the preview image with a virtual character image, based on the attributes of the external object, and output the synthesized preview image through the display.

### [Disclosure of Invention]

### [Technical Problem]

An electronic device having a limited or fixed display size has a limited range in which an avatar can be expressed, and may thus have a restriction in that a service is to be provided by using a motion or animation activity having a narrow behavior range.

For example, in the case of a flexible electronic device, the behavior range that can be expressed by an avatar is expanded as the active area in which visual information is displayed is expanded, and a scheme for supporting an avatar service accordingly may be necessary.

In various embodiments, an electronic device may increase the behavior range in which an avatar can be expressed in response to physical expansion of the display, and may provide expanded avatar contents that can be expressed within the increased behavior range.

### [Solution to Problem]

The present invention is defined by the appended set of claims. According to various embodiments, a flexible electronic device includes a first housing, a second housing disposed to be able to perform a sliding movement in a first direction or second direction with regard to the first housing, a driving device driven so as to move the second housing with regard to the first housing, a display having a first display area when the second housing moves in the first direction with regard to the first housing, the display being expanded to the first display area and a second display area when the second housing is moved by the driving device from the first housing in the second direction, and a processor operatively connected to the display and the driving device. The processor is configured to analyze a spatial element of a virtual first space in which an avatar is to be expressed from a first background image of a size corresponding to the first display area in case that an active area in which visual information is displayed on the display is the first display area during avatar service execution, and select and provide, in the first display area, an avatar in a first posture which can be expressed in the virtual first space, based on the spatial element of the virtual first space and characteristic information of the avatar, analyze a spatial element of a virtual second space from a second background image of a size corresponding to the first display area and the second display area, based on expansion of the active area of the display from the first display area to at least a part of the second display area, and select and provide at least one of an expansion service function and an avatar in a second posture which can be expressed in the virtual second space, based on the spatial element of the virtual second space and characteristic information of the avatar.

According to various embodiments, a method for operating an avatar by a flexible electronic device comprising a first housing and a second housing disposed to be able to perform a sliding movement in a first direction or second direction with regard to the first housing includes an operation of receiving an avatar service execution request through a display having a first display area when a second housing moves in a first direction with regard to a first housing, the display being expanded to the first display area and a second display area when the second housing moves from the first housing in a second direction, an operation of analyzing a spatial element of a first virtual first space in which an avatar is to be expressed from a first background image corresponding to the first display area in response to the avatar service execution request, in case that an active area in which visual information is displayed on the display is the first display area, an operation of selecting and displaying, in the active area which is the first display area, an avatar in a first posture which can be expressed in the virtual first space, based on the spatial element of the virtual first space characteristic information of the avatar, an operation of analyzing a spatial element of a second virtual space from a second background image corresponding to the first display area and the second display area, based on expansion of the active area of the display from the first display area to at least a part of the second display area, and an operation of selecting and displaying, in the active area corresponding to the first display area and the second display area, at least one of an expansion service function and an avatar in a second posture which can be expressed in the virtual second space, based on the spatial element of the virtual first space and the characteristic information of the avatar.

### [Advantageous Effects of Invention]

According to various embodiments, a flexible electronic device may change the behavior range of an avatar according to display expansion information and may switch to avatar contents which correspond to the changed behavior range, or which are expanded, thereby providing the user with an avatar service changed adaptively according to the situation.

### [Brief Description of Drawings]

Fig. 1 is a block diagram illustrating an electronic device in a network environment according to an embodiment of the disclosure.
FIG. 2A is a front perspective view of an electronic device 200 in a closed state according to an embodiment.
FIG. 2B is a rear perspective view of the electronic device 200 in a closed state according to an embodiment.
FIG. 3A is a front perspective view of the electronic device 200 in an open state according to an embodiment.
FIG. 3B is a rear perspective view of the electronic device 200 in an open state according to an embodiment.
FIG. 4 is an exploded perspective view of the electronic device 101 in FIG. 2A according to an embodiment.
FIG. 5 is a block diagram illustrating the configuration of an electronic device according to various embodiments.
FIG. 6 illustrates a method for operating an avatar by a flexible electronic device according to some embodiments.
FIG. 7 illustrates a method for operating an avatar by a flexible electronic device according to some embodiments.
FIG. 8 illustrates an example of an avatar operating screen of a flexible electronic device according to an embodiment.
FIG. 9 illustrates an example of an avatar operating screen of a flexible electronic device according to an embodiment.
FIG. 10 illustrates an example of an avatar operating screen of a flexible electronic device according to an embodiment.
FIG. 11 illustrates an example of an avatar operating screen of a flexible electronic device according to an embodiment.
FIG. 12 illustrates an example of an avatar operating screen of a flexible electronic device according to an embodiment.
FIG. 13 illustrate an example of an avatar operating screen of a flexible electronic device according to an embodiment.
FIG. 14 illustrate an example of an avatar operating screen of a flexible electronic device according to an embodiment.

### [Mode for the Invention]

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

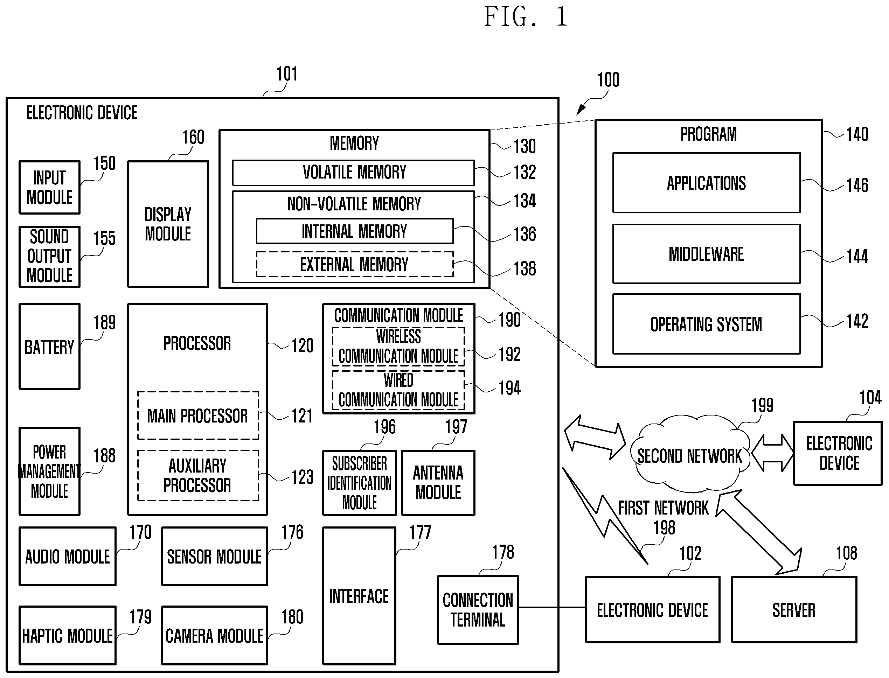

Fig. 1 is a block diagram illustrating an electronic device in a network environment according to an embodiment of the disclosure.

Fig. 1 is a block diagram illustrating an electronic device in a network environment according to an embodiment of the disclosure.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC.

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

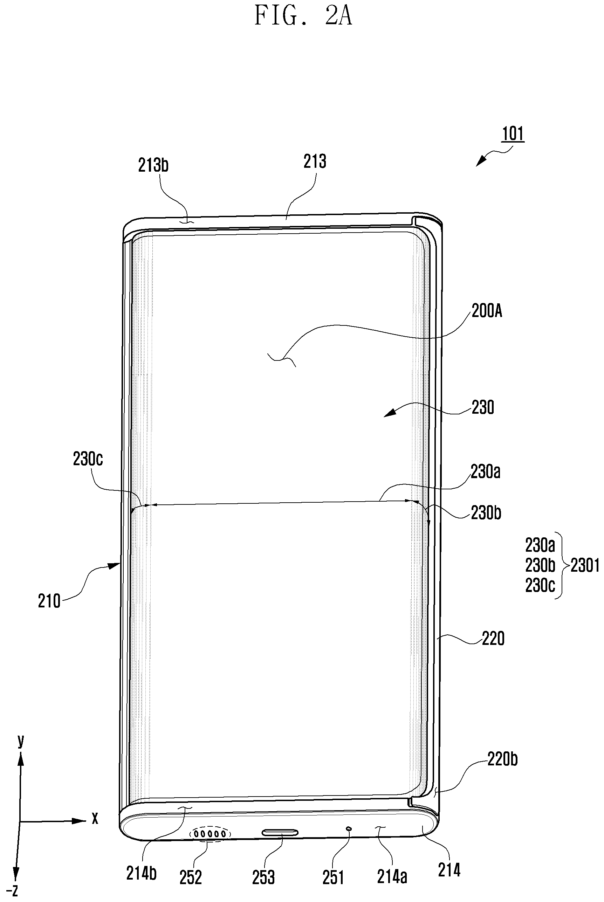

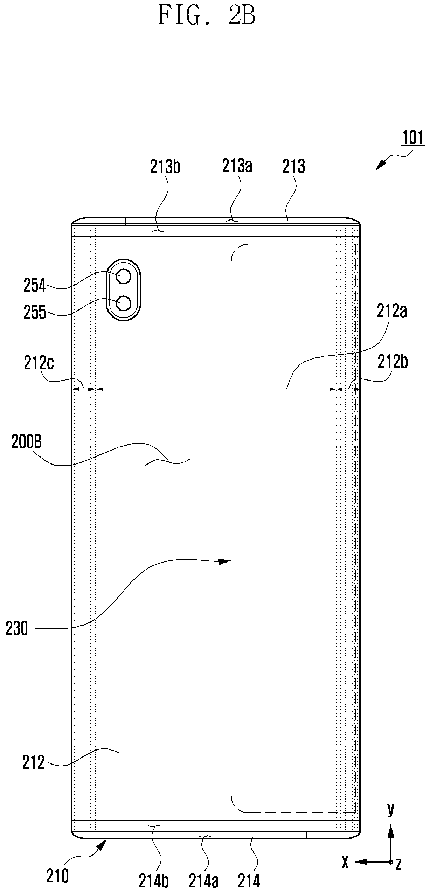

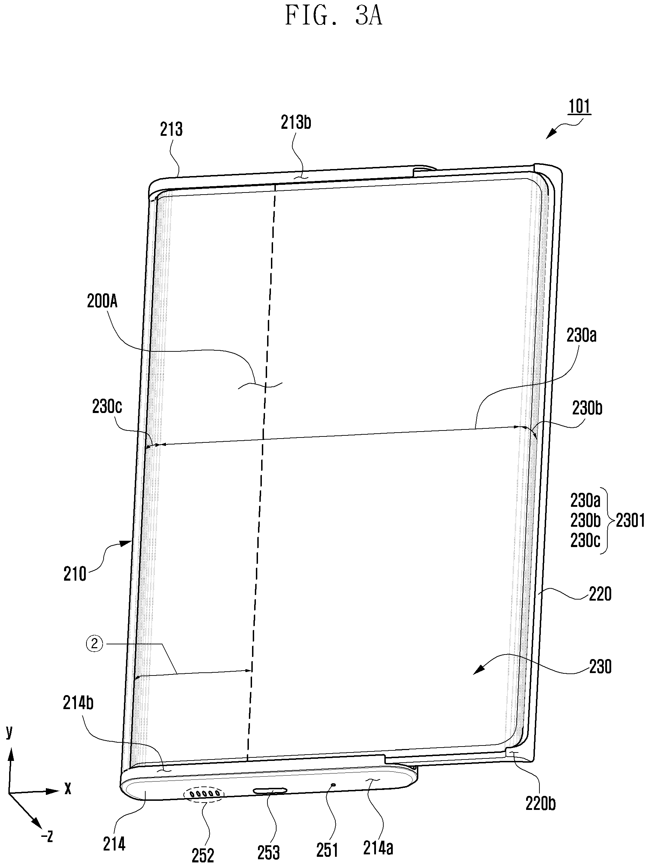

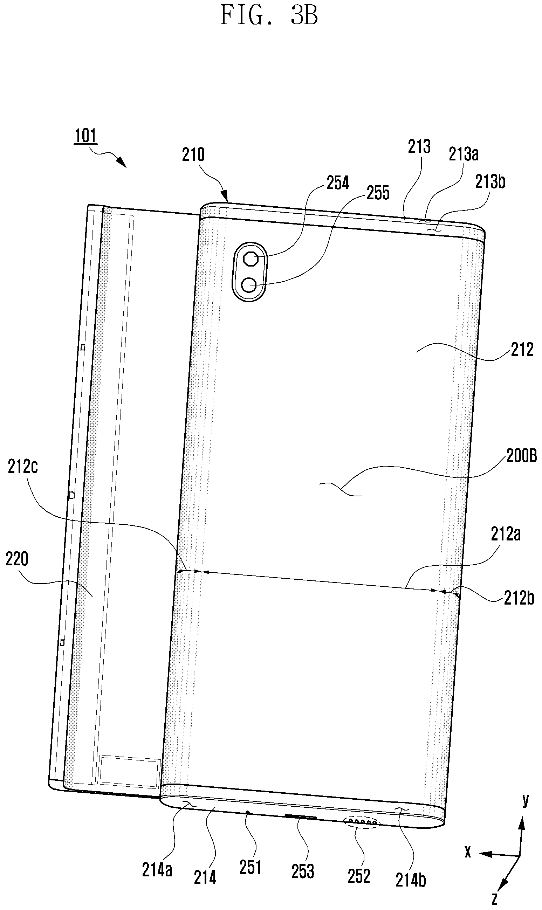

FIG. 2A is a front perspective view of an electronic device 200 in a closed state according to an embodiment. FIG. 2B is a rear perspective view of the electronic device 200 in a closed state according to an embodiment. FIG. 3A is a front perspective view of the electronic device 200 in an open state according to an embodiment. FIG. 3B is a rear perspective view of the electronic device 200 in an open state according to an embodiment.

According to various embodiments, the electronic device 200 in FIG. 2A may include the electronic device 101 in FIG. 1.

Referring to FIG. 2A, 2B, 3A, and 3B, in an embodiment, the electronic device 200 may be implemented to expand a screen 2301 in a sliding manner. For example, the screen 2301 may be an area of a flexible device 230 seen to the outside. FIG. 2A and FIG. 2B illustrate the electronic device 200, the screen 2301 of which is not expanded, and FIG. 3A and FIG. 3B illustrate the electronic device 200, the screen 2301 of which is expanded. A state where the screen 2301 is not expanded is a state where a sliding plate 220 for a sliding motion of the display 230 is not slid out, and may be called a "closed state" hereinafter. A state where the screen 2301 is expanded is a maximally expanded state where there is no more expansion of the screen 2301 caused by a slide-out of the sliding plate 220, and may be called an "open state" hereinafter. For example, a slide-out may be at least a partial movement of the sliding plate 220 in a first direction (e.g., a +x-axis direction) when the electronic device 200 is switched from a closed state to an open state. According to various embodiments, the open state may be defined as a state where the screen 2301 is expanded compared to the closed state, and may provide various screen sizes according to a movement position of the sliding plate 220. According to various embodiments, an intermediated state may indicate a state between the closed state of FIG. 2A and the open state of FIG. 3A. The screen 2301 may include an active area of the flexible display 230, which is visually exposed to enable image output, and the electronic device 200 may adjust the active area according to a movement of the sliding plate 220 or a movement of the flexible display 230. In the following description, the open state may indicate a state where the screen 2301 is maximally expanded. In an embodiment, the flexible display 230 that is disposed on the electronic device 200 in FIG. 2A so as to be slidable and provides the screen 2301 may also be called a "slide-out display" or an "expandable display".

According to an embodiment, the electronic device 200 may include a sliding structure related to the flexible display 230. For example, when the flexible display 230 is moved by a configured distance due to external force, a closed state or an open state may be switched to an open state or a closed state with no more external force due to an elastic structure included in the sliding structure (e.g., a semi-automatic sliding operation).

According to an embodiment, when a signal is generated via an input device included in the electronic device 200, the electronic device 200 may be switched from a closed state to an open state, or from an open state to a closed state by a driving device (e.g., the driving device 185 in FIG. 1) such as a motor connected to the flexible display 230. For example, when a signal is generated through a hardware button or a software button provided through the screen, the electronic device 200 may be switched from a closed state to an open state, or from an open state to a closed state.

According to various embodiments, when a signal is generated from various sensors such as a pressure sensor, the electronic device 200 may be switched from a closed state to an open state, or from an open state to a closed state. For example, a squeeze gesture indicating that a part (e.g., the palm or a finger) of a hand presses the electronic device 200 within a designated section thereof may be detected via a sensor when the electronic device 200 is carried or held by the hand, and accordingly, the electronic device 200 may be switched from a closed state to an open state or from an open state to a closed state.

According to an embodiment, the display 230 may include a second section ② (see FIG. 3A). The second section ② may include an expanded part of the screen 2301 when the closed state of the electronic device 200 is switched to the open state. When the electronic device 200 is switched from a closed state to an open state, the second section ② may slide to be ejected from an internal space of the electronic device 200, and thus the screen 2301 may be expanded. When the electronic device 200 is switched from an open state to a closed state, at least a part of the second section ② may slide to be retracted into the internal space of the electronic device 200, and thus the screen 2301 may be reduced. When the electronic device 200 is switched from an open state to a closed state, at least a part of the second section ② may be bent to be moved into the internal space of the electronic device 200. For example, the flexible display 230 may include a flexible substrate (e.g., a plastic substrate) made of a polymer material including polyimide (PI) or polyester (PET). The second section ② is a part of the flexible display 230 bent when the electronic device 200 is switched between an open state and a closed state, and for example, may be called a bendable section. In the following description, the second section ② will be called a bendable section.

According to an embodiment, the electronic device 200 may include a housing 210, the sliding plate 220, or the flexible display 230.

The housing (or case) 210 may include, for example, a back cover 212, a first side cover 213, or a second side cover 214. The back cover 212, the first side cover 213, or the second side cover 214 may be connected to a support member (not illustrated) positioned in the electronic device 200, and may configure at least a part of an exterior of the electronic device 200.

The back cover 212 may be configure, for example, at least a part of a rear surface 200B of the electronic device 200. In an embodiment, the back cover 212 may be substantially opaque. For example, the back cover 212 may be made of, for example, coated or colored glass, ceramic, polymer, metal (e.g., aluminum, stainless steel (STS), or magnesium), or a combination of two or more of the materials. According to an embodiment, in a state where the bendable section ② of the flexible display 230 is retracted into an interval space of the housing 210 (e.g., a closed state), at least a part of the bendable section ② may be disposed to be visible through the back cover 212 from the outside. In this case, the back cover 212 may be made of a transparent material and/or a translucent material.

According to an embodiment, the back cover 212 may include a flat part 212a and curved parts 212b and 212c positioned on opposite sides of the flat part 212a. The curved parts 212b and 212c are configured to be adjacent to relatively long both edges (not illustrated) of the back cover 212, respectively, and may seamlessly extend by being bent toward the screen positioned opposite to the back cover 212. According to an embodiment, the back cover 212 may be implemented to include one of the curved parts 212b and 212c or implemented without the curved parts 212b and 212c.

According to an embodiment, the first side cover 213 and the second side cover 214 may be positioned opposite to each other. For example, the first side cover 213 and the second side cover 214 may be positioned on opposite sides of the flexible display 230 in a second direction (e.g., a y-axis direction) orthogonal to the first direction (e.g., the +x-axis direction) of a slide-out of the sliding plate 220. The first side cover 213 may configure at least a part of a first side surface 213a of the electronic device 200, and the second side cover 214 may configure at least a part of a second side surface 214a of the electronic device 200 oriented in a direction opposite to the first side surface 213a. The first side cover 213 may include a first border part (or a first rim) 213b extending from an edge of the first side surface 213a. For example, the first border part 213b may configure at least a part of a one-side bezel of the electronic device 200. The second side cover 214 may include a second border part (or a second rim) 214b extending from an edge of the second side surface 214a. For example, the second border part 214b may configure at least a part of the other-side bezel of the electronic device 200. According to an embodiment, in a closed state of FIG. 2A, a surface of the first border part 213b, a surface of the second border part 214b, and a surface of the sliding plate 220 may be connected smoothly to configure a one-side curved part (not illustrated) corresponding to a first curved part 230b of the screen 2301. According to various embodiments, the surface of the first border part 213b or the surface of the second border part 214b may include the other-side curved part (not illustrated) corresponding to a second curved part 230c of the screen 2301 positioned opposite to the first curved part 230b..

According to an embodiment, the sliding plate 220 may perform a sliding motion on a support member (not illustrated) positioned in the electronic device 200. At least a part of the flexible display 230 may be disposed on the sliding plate 220, and the closed state of FIG. 2A or the open state of FIG. 3A may be made based on the position of the sliding plate 220 on the support member. According to an embodiment, the flexible display 230 may be attached to the sliding plate 120 through a bonding member (or an adhesive member) (not illustrated). According to an embodiment, the bonding member may include a thermo-reactive bonding member, a photo-reactive bonding member, a normal bonding agent, and/or double-sided tape. According to an embodiment, the flexible display 230 may be inserted into a recess disposed on the sliding plate 220 in a sliding manner and disposed on and fixed to the sliding plate 220. The sliding plate 220 functions to support at least a part of the flexible display 230, and in an embodiment, may be called a display support structure.

According to an embodiment, the sliding plate 220 may include a third border part 220b configuring an outer surface (e.g., a surface exposed to the outside to configure an exterior of the electronic device 200) of the electronic device 200. For example, the third border part 220b may configure a bezel around the screen together with the first border part 213b and the second border part 214b in the closed state of FIG. 2A. The third border part 220b may extend in the second direction (e.g., the y-axis direction) to connect one end of the first side cover 213 and one end of the second side cover 214 in a closed state. For example, in the closed state of FIG. 2A, a surface of the third border part 220b may be smoothly connected to the surface of the first border part 213b and/or the surface of the second border part 214b.

According to an embodiment, due to a slide-out of the sliding plate 220, at least a part of the bendable section ② may exit from the inside of the electronic device 200, and thus an expanded state (e.g., an open state) of the screen 2301 as shown in FIG. 3A may be provided.

According to an embodiment, in the closed state of FIG. 2A, the screen 2301 may include a flat part 230a and the first curved part 230b and/or the second curved part 230c positioned on opposite sides of the flat part 230a. For example, the first curved part 230b and the second curved part 230c may be substantially symmetrical with respect to the flat part 230a. For example, in the closed state of FIG. 2A, the first curved part 230b and/or the second curved part 230c may be positioned to correspond to the curved parts 212b and 212c of the back cover 212, respectively, and may be bent toward the back cover 212. When the closed state of FIG. 2A is switched to the open state of FIG. 3A, the flat part 230a may be expanded. For example, a partial area of the bendable section ② configuring the second curved part 230c in the closed state of FIG. 2A may be included in the expanded flat part 230a when the closed state of FIG. 2A is switched to the open state of FIG. 3A, and may be configured as a different area of the bendable section ②..

According to an embodiment, the electronic device 200 may include an opening (not illustrated) for retracting or ejecting the bendable section ② and/or a pulley (not illustrated) positioned at the opening. The pulley may be positioned to correspond to the bendable section ②, and a movement of the bendable section ② and a movement direction thereof may be guided through rotation of the pulley during switching between the closed state of FIG. 2A and the open state of FIG. 3A. The first curved part 230b may be configured to correspond to a curved surface on one surface of the sliding plate 220. The second curved part 230c may be configured by a part corresponding to a curved surface of the pulley in the bendable section ②. The first curved part 230b is positioned opposite to the second curved part 230c in a closed state or an open state of the electronic device 200 so as to improve the beauty of the screen 2301. According to an embodiment, the expanded flat part 230a may be implemented without the first curved part 230b.

According to an embodiment, the flexible display 230 may further include a touch sensing circuit (e.g., a touch sensor). According to various embodiments (not illustrated), the flexible display 230 may be coupled to or disposed to be adjacent to a touch sensing a pressure sensor capable of measuring the strength (pressure) of a touch, and/or a digitizer that detects an input device (e.g., a stylus pen) using a magnetic field scheme. For example, the digitizer may include a coil member disposed on a dielectric substrate to detect an electromagnetic induction type resonant frequency applied from a pen input device.

According to an embodiment, the electronic device 200 may include a microphone hole 251 (e.g., the input module 150 in FIG. 1), a speaker hole 252 (e.g., the sound output module 155 in FIG. 1), a connector hole 253 (e.g., the connection terminal 178 in FIG. 1), a camera module 254 (e.g., the camera module 180 in FIG. 1), or a flash 255. According to various embodiments, the flash 255 may be implemented to be included in the camera module 254. In an embodiment, the electronic device 200 may omit at least one of elements or additionally include other elements.

The microphone hole 251 may be, for example, configured on at least a part of the second side surface 214a to correspond to a microphone (not illustrated) positioned in the electronic device 200. The position of the microphone hole 251 may be various without being limited to the embodiment of FIG. 2a. According to an embodiment, the electronic device 200 may include multiple microphones capable of detecting the direction of a sound.

The speaker hole 252 may be, for example, configured on at least a part of the second side surface 214a to correspond to a speaker positioned in the electronic device 200. The position of the speaker hole 252 may be various without being limited to the embodiment of FIG. 2a. According to various embodiments, the electronic device 200 may include a call receiver hole. In an embodiment, the microphone hole 251 and the speaker hole 252 may be implemented as one hole, or the speaker hole 252 may be omitted like a piezo speaker.

The connector hole 253 may be, for example, configured on at least a part of the second side surface 214a to correspond to a connector (e.g., a USB connector) positioned in the electronic device 200. The electronic device 200 may transmit and/or receive power and/or data with an external electronic device electrically connected to the connector through the connector hole 253. The position of the connector hole 253 may be various without being limited to the embodiment of FIG. 2a.

The camera module 254 and the flash 255 may be positioned on, for example, the rear surface 200B of the electronic device 200. The camera module 154 may include one or multiple lenses, an image sensor, and/or an image signal processor. The flash 255 may include, for example, a light emitting diode or a xenon lamp. In an embodiment, two or more lenses (an infrared camera, and wide-angle and telephoto lenses) and image sensors may be positioned on one surface of the electronic device 200. According to various embodiments, without being limited to the embodiment of FIG. 2B or FIG. 3B, the electronic device 200 may include multiple camera modules. The camera module 254 may be one of the multiple camera modules. For example, the electronic device 200 may include multiple camera modules (e.g., a dual camera or a triple camera) having different attributes (e.g., a field of view) or functions. For example, there may be multiple camera modules (e.g., the camera module 254) including lenses having different fields of view, and the electronic device 200 may control to change the field of view of a camera module performed in the electronic device 200, based on a user's selection. In addition, multiple camera modules may include at least one of a wide-angle camera, a telephoto camera, a color camera, a monochrome camera, or an infrared (IR) camera (e.g., a time-of-flight (TOF) camera, or a structured light camera). According to an embodiment, the IR camera may be operated as at least a part of a sensor module (not illustrated).

According to various embodiments (not illustrated), the electronic device 200 may further include a camera module (e.g., a front camera) that generates an image signal, based on light received through one surface (e.g., a front surface 200A) of the electronic device 200 placed in a direction the screen 2301 faces. For example, the camera module 254 may not be limited to the embodiment of FIG. 2B or FIG. 3B, and may be positioned in the housing 210 in alignment with an opening (e.g., a through hole or a notch) configured on the flexible display 230. The camera module 254 may receive light through the opening and a partial area of a transparent cover overlapping with the opening, to generate an image signal. The transparent cover functions to protect the flexible display 230 from the outside, and for example, may include a material such as polyimide or ultra-thin class (UTG).

According to an embodiment, without being limited to the embodiment of FIG. 2B or FIG. 3B, the camera module 254 may be disposed under at least a part of the screen 2301 of the flexible display 230, and may perform a relevant function (e.g., image capturing) without visual distinguishment (or exposure) of the position of the camera module 254. In this case, for example, when viewed from above the screen 2301 (e.g., when view in the -z-axis direction), the camera module 254 may be disposed to overlap with at least a part of the screen 2301 and thus may obtain an image of an external object without being exposed to the outside.

According to various embodiments (not illustrated), the electronic device 200 may further include a key input device (e.g., the input module 150 in FIG. 1). The key input device may be, for example, positioned on the first side surface 213a of the electronic device 200 configured by the first side cover 213. In an embodiment (not illustrated), the key input device may include at least one sensor module.

According to various embodiments (not illustrated), the electronic device 200 may include various sensor modules (e.g., the sensor module 176 in FIG. 1). The sensor module may generate an electrical signal or a data value corresponding to an internal operation state or an external environment state of the electronic device 200. For example (not illustrated), the sensor module may include a proximity sensor that generates a signal related to proximity of an external object, based on light received through the front surface 200A of the electronic device 200 placed in a direction the screen 2301 faces. As another example (not illustrated), the sensor module may include various biometric sensors, such as a fingerprint sensor or an HRM sensor for detecting biometric information, based on light received through the front surface 200A or the rear surface 200B of the electronic device 200. The electronic device 200 may include at least one of various other sensor modules, for example, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to various embodiments, without being limited to the embodiment of FIG. 2A, FIG. 2B, FIG. 3A, and FIG. 3C, the electronic device 200 may be implemented in a structure the screen is expanded at the third border part 220b when the sliding plate 220 is slid out. For example, a partial area of the flexible display 230 configuring the first curved part 230b in the closed state of FIG. 2A may be included in the expanded flat part 230a when the closed state of FIG. 2A is switched to the open state of FIG. 3A, and may be configured as a different area of the flexible display 230.

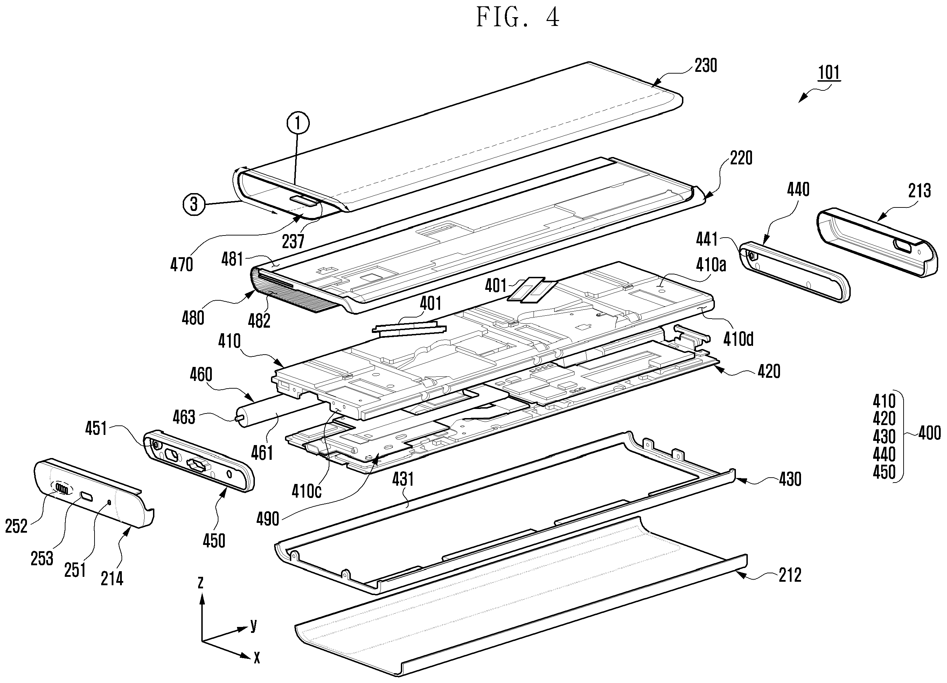

FIG. 4 is an exploded perspective view of the electronic device 101 in FIG. 2A according to an embodiment.

Referring to FIG. 4, in an embodiment, the electronic device 101 may include a back cover 212, a first side cover 213, a second side cover 214, a support member assembly 400, a pulley 460, a sliding plate 220, a flexible display 230, a support sheet 470, a multi-bar structure (or multi-bar assembly) 480, or a printed circuit board 490 (for example, printed circuit board (PCB), flexible PCB (FPCB), or rigid-flexible PCB (RFPCB)). Repeated descriptions of some of the reference numerals in FIG. 4 will be omitted.

According to an embodiment, the support member assembly (or support structure) 400 may be a frame structure capable of enduring a load, and may contribute to the durability or rigidity of the electronic device 101. At least a part of the support member assembly 400 may include a nonmetal material (for example, polymer) or a metal material. The housing 210 (refer to FIG. 2A) including the back cover 212, the first side cover 213, or the second side cover 214, the pulley 460, the sliding plate 220, the flexible display 230, the support sheet 470, the multi-bar structure 480, or the printed circuit board 490 may be disposed on or coupled to the support member assembly 400.

According to an embodiment, the support member assembly 400 may include a first support member 410, a second support member 420, a third support member 430, a fourth support member 440, or a fifth support member 450.

The first support member (or first bracket) 410 may have the shape of a plate, for example. The sliding plate 220 may be disposed on a surface 410a of the first support member 410. The second support member (or second bracket) 420 may have the shape of a plate overlapping at least a part of the first support member 410 when seen in the z-axis direction, for example, or may be coupled to the first support member 410 and/or the third support member 430. The second support member 420 may be positioned between the first support member 410 and the third support member 430. The third support member 430 may be coupled to the first support member 410 and/or the second support member 420 with the second support member 420 interposed therebetween. The printed circuit board 490 may be disposed on the second support member 420 between the first support member 410 and the second support member 420. The fourth support member 440 may be coupled to one side of an assembly (or structure) (not illustrated) to which the first support member 410, the second support member 420, and the third support member 430 are coupled. The fifth support member 450 may be coupled to another side of the assembly (or structure) (not illustrated) to which the first support member 410, the second support member 420, and the third support member 430 are coupled, and may be positioned on the opposite side to the fourth support member 440. The first side cover 213 may be coupled to the support member assembly 400 from the fourth support member 440 side. The second side cover 214 may be coupled to the support member assembly 400 from the fifth support member 450 side. The back cover 212 may be coupled to the support member assembly 400 from the third support member 430 side. At least a part of the first support member 410, the second support member 420, the third support member 430, the fourth support member 440, or the fifth support member 450 may include a metal material and/or a nonmetal material (for example, polymer). According to various embodiments, at least two of the first support member 410, the second support member 420, the third support member 430, the fourth support member 440, and the fifth support member 450 may be implemented integrally. According to some embodiments, the support member assembly 400 may refer to a structure forming at least some of the first support member 410, the second support member 420, the third support member 430, the fourth support member 440, and the fifth support member 450. According to some embodiments, some of the first support member 410, the second support member 420, the third support member 430, the fourth support member 440, and the fifth support member 450 may be omitted.

The first support member 410 may include, for example, a first side surface (not illustrated) facing the fourth support member 440, a second side surface 410c which faces the fifth support member 450, and which is positioned opposite to the first side surface, a third side surface (not illustrated) connecting one end of the first side surface and one end of the second side surface 410c, or a fourth side surface 410d which connects the other end of the first side surface and the other end of the second side surface 410c, and which is positioned opposite to the third side surface. According to an embodiment, the pulley 460 may be positioned near the third side surface of the first support member 410. As another example, in the case of an electronic device having an opposite sliding-out direction, the pulley 460 may be positioned near the fourth side surface 410d of the first support member 460. The pulley 460 may include a roller 461 having the shape of a cylinder extending in a direction from the fifth support member 450 toward the fourth support member 440 (for example, in the +y axis direction). The pulley 460 may include a first rotation shaft (not illustrated) and a second rotation shaft 463, which are connected to the roller 461. The first rotation shaft and the second rotation shaft 463 may be positioned on opposite sides with the roller 461 interposed therebetween. The first rotation shaft may be positioned between the roller 461 and the first side cover 213, and may be connected to the fourth support member 440. The second rotation shaft 463 may be positioned between the roller 461 and the second side cover 214, and may be connected to the fifth support member 450. The fourth support member 440 may include a first through-hole 441 into which the first rotation shaft is inserted, and the fifth support member 450 may include a second through-hole 451 into which the second rotation shaft 463 is inserted. The roller 461 may be able to rotate based on the first rotation shaft disposed on the fourth support member 440 and the second rotation shaft 463 disposed on the fifth support member 450.

According to an embodiment, the sliding plate 220 may be disposed on the support member assembly 400 to be able to slide on the first support member 410. For example, a sliding structure may be provided between the first support member 410 and the sliding plate 220 in order to support and guide coupling therebetween and movements of the sliding plate 220. According to an embodiment, the sliding structure may include at least one elastic structure 401. If the sliding plate 220 is moved to a configured distance by an external force, the at least one elastic structure 401 may switch from the closed state in FIG. 2A to the open state in FIG. 3A, or from the open state to the closed state, even without an additional external force. The at least one elastic structure 401 may include various elastic members such as a torsion spring, for example. For example, as the elastic structure 401, the torsion spring may include one end connected to the sliding plate 220, the other end connected to the first support member 410, and a spring portion between the one end and the other end. If the sliding plate 220 is moved by an external force to a configured distance in a first direction (for example, in the +x axis direction) in which the same slides out, the position of the one end is changed with regard to the other end, and the sliding plate 200 thus may be moved in the first direction by the elastic force form the spring portion, without any additional external force, thereby switching from the closed state in FIG. 2A to the open state in FIG. 3A. If the sliding plate 220 is moved by an external force to a configured distance in a second direction (for example, in the -x axis direction) opposite to the first direction, the position of the one end is changed with regard to the other end, and the sliding plate 220 thus may be moved in the second direction by the elastic force form the spring portion, without any additional external force, thereby switching from the open state in FIG. 3A to the closed state in FIG. 2A.

According to various embodiments, the housing 210 may be defined to further include at least a part of the support member assembly 400. For example, the housing 210 may include a surface (for example, a surface 410a formed by the first support member 410) facing in a first direction (for example, in the +z axis direction), and another surface (for example, rear surface 101B in FIG. 2B) facing in a second direction (for example, in the -z axis direction) opposite to the first surface 410a. A display support surface 220 may be disposed on a surface (for example, a surface 410a formed by the first support member 410) of the housing 210 to be able to slide in a third direction (for example, in the x axis direction) perpendicular to the first direction. According to an embodiment, the flexible display 230 may include a first section ① extending from a bendable section ②. The first section ① may be disposed on the sliding plate 220. When switching from the closed state in FIG. 2A to the open state in FIG. 3A, the first section ① and the bendable section may ② may move outwards as if sliding as a result of the sliding of the sliding plate 220, thereby expanding the screen (refer to the screen 2301 in FIG. 3A). When switching from the open state in FIG. 3A to the closed state in FIG. 2A, the bendable section ② may at least partially move into the electronic device 101 as a result of the sliding of the sliding plate 220, thereby reducing the screen (refer to the screen 2301 in FIG. 2A). The support member assembly 400 may include an opening (not illustrated) for an inward or outward movement of the bendable section ②, and the pulley 460 may be positioned in the opening. The opening includes a gap between the first support member 410 and the third support member 430, and a part 431 of the third support member 430 adjacent to the opening may have a curved shape corresponding to the curved surface of the roller 461. The pulley 460 may be positioned so as to correspond to the bendable section ②, and the pulley 460 may be rotated by a movement of the bendable section ② while switching between the closed state in FIG. 2A and the open state in FIG. 3A.

According to an embodiment, the support sheet 470 may be attached to the back surface of the flexible display 230. The back surface of the flexible display 230 may refer to a surface positioned opposite to a surface through which light is emitted from a display panel including multiple pixels. The support sheet 470 may contribute to the durability of the flexible display 230. The support sheet 470 may reduce the influence exerted on the flexible display 230 by a load or stress that may occur while switching between the closed state in FIG. 2A and the open state in FIG. 3A. The support sheet 470 may prevent the flexible display 230 from being damaged by a force resulting from a movement of the sliding plate 220. Although not illustrated, the flexible display 230 may include a first layer including multiple pixels and a second layer coupled to the first layer. The first layer may include a light-emitting layer (for example, display panel) including multiple pixels implemented by a light-emitting element such as an organic light emitting diode (OLED) or a micro light emitting diode (LED), for example, and various other layers (for example, an optical layer for improving the screen image quality or improving the outdoor visibility, such as a polarizing layer). According to an embodiment, the optical layer may selectively transmit light which is generated by the light source of the light-emitting layer, and which vibrates in a predetermined direction. According to an embodiment, when seen from above the screen 2301 (for example, when seen in the -z axis direction), no pixels may be disposed in a partial area of the flexible display 230 at least partially overlapping at least one electronic component (for example, camera module or sensor module) included in the electronic device 101. According to some embodiments, when seen from above the screen 2301, a partial area of the flexible display 230 at least partially overlapping at least one electronic component (for example, camera module or sensor module) included in the electronic device 101 may include a pixel structure and/or a wire structure different from those of other areas. For example, a partial area of the flexible display 230 at least partially overlapping at least one electronic component (for example, camera module or sensor module) included in the electronic device 101 may have a pixel density different from those of other areas. For example, a partial area of the flexible display 230 at least partially overlapping at least one electronic component (for example, camera module or sensor module) included in the electronic device 101 may be implemented as a substantially transparent area formed by changing the pixel structure and/or the wire structure, although no opening is included. The second layer may include various layers for a role of supporting and protecting the first layer (for example, cushion), a role of blocking light, a role of absorbing or blocking electromagnetic waves, or a role of diffusing, dispersing, or radiating heat. According to an embodiment, at least a part of the second layer may be a conductive member (for example, metal plate) used to help reinforce the rigidity of the electronic device 101, to block peripheral noise, and to disperse heat radiated from a peripheral heat-radiating component (for example, display driving circuit). According to an embodiment, the conductive member may include at least one of copper (Cu), aluminum (Al), stainless steel (SUS), or CLAD (for example, laminated member having SUS and AI disposed alternately).

The support sheet 470 may be attached to the back surface of the second layer while covering at least a part of the second layer of the flexible display 230. The support sheet 470 may be made of various metal materials and/or nonmetal materials (for example, polymer). According to an embodiment, the support sheet 470 may include stainless steel. According to some embodiments, the support sheet 470 may include engineering plastic. According to some embodiments, the support sheet 470 may be implemented integrally with the flexible display 230. According to an embodiment, the support sheet 470 may include a lattice structure (not illustrated) at least partially overlapping a part of the flexible display 230, which is bent and disposed (for example, bendable section ② in FIG. 3A or FIG. 4 (first curved portion 230b in FIG. 2A or FIG. 3A)). The lattice structure may include multiple openings or multiple slits and may contribute to bendability of the flexible display 230. According to some embodiments, the support sheet 470 may include a recess pattern (not illustrated) including multiple recesses, instead of the lattice structure, and the recess pattern may contribute to bendability of the flexible display 230. According to some embodiments, the lattice structure or the recess pattern may be expanded as at least a part of the planar portion 230a in FIG. 2A or FIG. 3A. According to some embodiments, the support sheet 470 including a lattice structure or a recess pattern, or a conductive member corresponding thereto may include multiple layers.

According to an embodiment, the multi-bat structure 480 may be connected to the sliding plate 220, and may include a first surface 481 facing the support sheet 470 and a second surface 482 positioned opposite to the first surface 481. When the sliding plate 220 moves, the movement and direction of the multi-bar structure 480 may be guided by the roller 461 which rotates through friction with the second surface 482. According to an embodiment, the second surface 482 may include multiple bars (not illustrated) arranged so as to extend in the direction from the second rotation shaft 463 of the pulley 460 to the first rotation shaft (not illustrated) (for example, in the +y axis direction). The multi-bar structure 480 may have bent parts between the multiple bars, which have relatively small thicknesses. In various embodiment, such a multi-bar structure 480 may also be termed a "flexible track" or a "hinge rail".

According to an embodiment, in the closed state in FIG. 2A or in the open state in FIG. 3A, at least a part of the multi-bar structure 480 may be positioned to overlap the screen 2301 (refer to FIG. 2A or FIG. 3A) and may support the bendable section ② such that the bendable section ② of the flexible display 230 remains smoothly connected to the first section ① of the flexible display 230 without detaching. The multi-bar structure 480 may contribute to a movement of the bendable section ② while remaining smoothly connected to the first section ① without detaching, when switching between the closed state in FIG. 2A and the open state in FIG. 3A.

According to an embodiment, the support sheet 470 may be configured such that elements (for example, multi-bar structure 380) positioned inside the electronic device 101 are substantially invisible through the flexible display 230.

When the screen is expanded (for example, in the open state in FIG. 3A), an unsmooth screen may be provided due to detachment resulting from elasticity of the flexible display 230 and/or the support sheet 470. According to some embodiments, in order to prevent this, a tension structure (not illustrated) regarding the flexible display 230 and/or the support sheet 470 may be provided. The tension structure may contribute to smooth sliding movements while maintaining tension.

According to an embodiment, on the printed circuit board 490, a processor (for example, processor 120 in FIG. 1), a memory (for example, memory 130 in FIG. 1), and/or an interface (for example, interface 177 in FIG. 1) may be mounted. The processor may include, for example, one or more among a central processing device, an application processor, a graphic processing device, an image signal processor, a sensor hub processor, or a communication processor.

The memory may include, for example, a volatile memory or a nonvolatile memory. The interface may include, for example, a high definition multimedia interface (HDMI), a universal serial bus (USB) interface, an SD card interface, and/or an audio interface. The interface may connect, for example, the electronic device 101 to an external electronic device electrically or physically, and may include a USB connector, an SD card/MMC connector, or an audio connector.

The electronic device 101 may include various other elements disposed on the printed circuit board 490 or electrically connected to the printed circuit board 490. For example, the electronic device 101 may include a battery (not illustrated) positioned between the first support member 410 and the second support member 420 or between the second support member 420 and the back cover 212. The battery (not illustrated) is a device for supplying electric power to at least one component of the electronic device 101 and may include, for example, a primary battery which is not rechargeable, a secondary battery which is rechargeable, or a fuel cell. The battery (not illustrated) may be disposed integrally inside the electronic device 101 or may be disposed to be attachable to/detachable from the electronic device 101. According to an embodiment, the electronic device 101 may include an antenna (not illustrated) positioned between the first support member 410 and the second support member 420 or between the second support member 420 and the back cover 212. The antenna (not illustrated) may include, for example, a near field communication (NFC) antenna, a wireless charging antenna, and/or a magnetic secure transmission (MST) antenna. The antenna (not illustrated) may perform short-range communication with an external device, for example, or may transmit/receive wirelessly electric power necessary for charging. In another embodiment, an antenna structure may be formed by a part or a combination or the first side cover 213 and/or the second side cover 214.

According to an embodiment, the electronic device 101 may include a flexible printed circuit board (FPCB) 237 electrically connecting the flexible display 230 and the printed circuit board 490. For example, the FPCB 237 may be electrically connected to the printed circuit board 490 through an opening (not illustrated) formed in the sliding plate 220 and an opening (not illustrated) formed in the first support member 410.

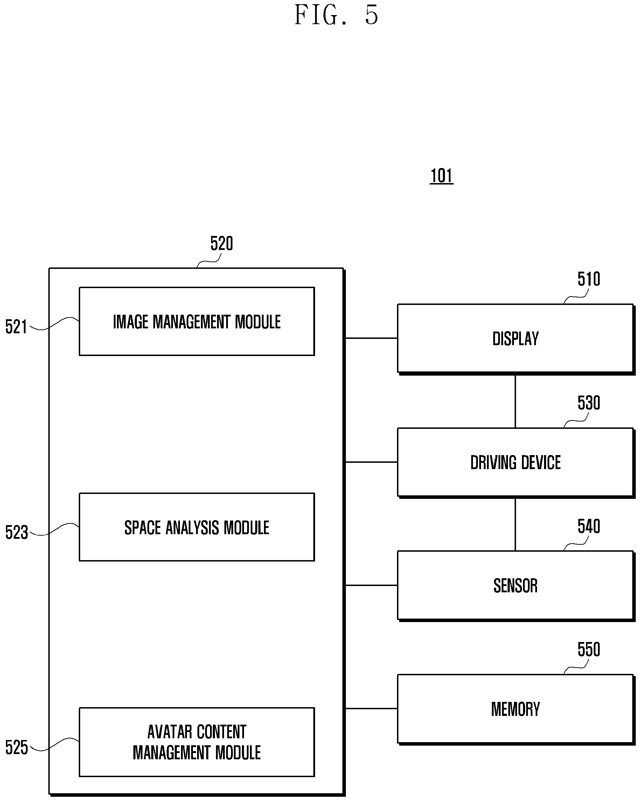

FIG. 5 is a block diagram illustrating the configuration of an electronic device according to various embodiments.

Referring to FIG. 5, the electronic device (for example, electronic device 101 in FIG. 1) according to an embodiment may include a display 510, a processor 520 (for example, processor 120 in FIG. 1), a driving device 530, a sensor 540, and a memory 550. The electronic device 101 may further include at least some of the components and/or functions of the electronic device 101 in FIG. 1, and may include components overlapping those in FIG. 1.

The electronic device 101 in FIG. 5 may be a flexible electronic device (for example, electronic device 101 in FIG. 2A, FIG. 2B, FIG. 3A, FIG. 3B, and FIG. 4) having an active area (or display area) in which visual information is to be displayed, and which is implemented to be varied in a sliding type or roller type.

According to an embodiment, the electronic device 101 may support at least one among a function of applying an avatar to virtual reality, augmented reality, or mixed reality, a function of analyzing a spatial element in an image, a function of deriving a virtual three-dimensional (3D) space which refers to an avatar activity radius, and a function of providing an avatar content service conforming to the 3D space. The above functions may be provided through an avatar application, a virtual reality application, an augmented reality application, or a mixed reality application. Alternatively, the above functions may be provided as one of functions provided by a camera application (for example, app in app).

The display 510 may include a first display area A1 exposed to the outside and a second display area A2 moved inwards or outwards according to the state of the electronic device 101.

As described above, the display 510 may have an active area in which visual information (for example, execution screen) is to be displayed by the display 510, and which is determined based the state of the electronic device 101. For example, when the electronic device 101 is in a first state (for example, closed state) in which the second display area A2 is moved inwards, the active area may be determined to be the first display area A1, and visual information may be displayed in the first display area A1. As another example, when the electronic device 101 is in a second state (for example, open state) in which the second display area A2 is moved outwards, the active area may be determined to be the entire area (for example, first display area A1 and second display area A2) of the display 510, and visual information may be displayed in the entire area.

According to some embodiments, the display 510 may vary the area of the second display area A2 exposed to the outside of the electronic device 101 according to a user input or the accumulated number of inputs. For example, the display 510 may be implemented such that the second display area A2 is exposed in a stepwise manner.

The driving device 530 may be configured such that at least a part of the display 510 is moved into the inner space of the housing of the electronic device 101 or moved out of the same. For example, the driving device 530 may be implemented as a rotating assembly/sliding motor, but is not limited thereto.

According to some embodiments, the electronic device 101 may control the driving device 530 by an external force (for example, a squeeze gesture for pressurizing the electronic device 101). The elastic structure of the driving device 530 may enable the electronic device 101 to switch (for example, semi-automatic sliding) from a closed state to an open state or vice versa, without an additional external force.

According to some embodiments, upon sensing a signal generated through an input device (for example, a hardware button or a software button provided through a screen), the driving device 530 may operate such that the electronic device 101 switch from a closed state to an open state, or vice versa.

The sensor 540 may generate data used to recognize the state (for example, first state, second state) of the electronic device 101. The sensor 540 may include a sensor (for example, encoder, hall sensor) attached to the driving device 530 so as to generate and output data corresponding to the rotational angle of the driving device 530. As another example, the sensor 540 may include a sensor disposed on a designated portion (for example, a part of the second display area A2) of the display 510 so as to generate data corresponding to the curvature of the bendable section ②.

The memory 550 may store data related to an avatar service. The memory 550 may store instructions which cause the processor 510 to perform a function of providing first avatar contents through a part (for example, first display area A1) of the display 510 configured as an active area, a function of converting first avatar contents to second avatar contents, based on expansion of the electronic device 101 to another part (for example, second display area A2) extending from a part of the display 510, and a function of providing the same.

The processor 550 may be operatively connected to the display 510, the driving device 530, the sensor 540, and the memory 550.

The processor 520 may recognize, based on data received from the sensor 540 or the driving device 530, a change in state of the electronic device 101, and may respond thereto in real time, thereby determining an active area. As an example of the real-time response, the processor 510 may track the area of the active area. The processor 520 may recognize an externally exposed part of the second display area A2 and may expand the active area to from the first display area A1 to the exposed part of the second display area A2.

According to an embodiment, the processor 520 may include an image management module 521, a space analysis module 523, and an avatar content management module 525. These modules may be configured as hardware modules of the processor 520 (for example, application processor or image processing processor). At least one of the modules 521, 523, 525 may be configured in the electronic device as separate hardware different from the processor. Alternatively, the modules 521, 523, 525 may be implemented as software (for example, program 140), and the processor 210 may execute operations, based on instructions implemented in the software.

The image management module 521 may acquire a background image (or background video) of virtual reality, augmented reality, or mixed reality related to an avatar (for example, augmented reality (AR) avatar), may acquire active area information from the display 510, the driving device 530, or the sensor 540, and may track the area of the active area.

The image management module 521 may determine a cutoff/cropping area (or view area) appropriate for the area of the active area of the current display 510 within the background image by responding in real time to the active area that changes according to a change in state of the electronic device 101. The background image may be a virtual reality space image (for example, 360° virtual reality space) or a real image acquired from a camera, but is not limited thereto.

The space analysis module 523 may recognize spatial elements (for example, a floor, a wall, a ceiling, an object) inside the cutoff area and may analyze parameters (for example, size, area, height, distance) of respective spatial elements. Based on the spatial elements in the cutoff area, the space analysis module 523 may derive a virtual 3D space (for example, avatar activity area) in which an avatar is to be positioned on a part (for example, cutoff area) of the background image. For example, the space analysis module 523 may determine x, y, z-axis values for the virtual 3D space, based on a floor area, inside the cutoff area.

The avatar content management module 525 may configure an avatar service user interface (UI) for selecting avatar contents that can be expressed in the 3D space, based on the size of the 3D space, and may provide the same to the display 510. The avatar content management module 525 may a UI environment for supporting functions related to avatars to an active area of the display 510 determined according to the state of the electronic device 101.

The avatar content management module 525 may position an avatar in the virtual 3D space, based on characteristic information (for example, the size of the legs, arms, body, and face of the avatar, avatar motions, avatar animation activities, avatar postures) of the avatar (for example, a default avatar or an avatar designated by the user), and may select avatar contents that can be expressed in the virtual 3D space. For example, the avatar content management module 525 may position an avatar at a specific location (for example, at the center) of the virtual 3D space, and may select, from avatar motions, postures, or animation activities, avatar contents such that the legs and arms of the avatar are not out of the virtual 3D space.

The avatar content management module 525 may respond in real time to the active area that changes according to a change in state of the electronic device 101, thereby changing the virtual 3D space, may select avatar contents in real time in response thereto, may configure an avatar service UI by using the selected avatar contents, and may provide the same to the display 510.

The avatar content management module 525 may respond in real time to the active area that is expanded according to a change in state of the electronic device 101, and may provide an expansion service function (for example, main avatar additional display function, avatar interaction function, replication function) appropriate for the expanded active area.

According to various embodiments, a flexible electronic device (for example, electronic device 101 in FIG. 1, electronic device 101 in FIG. 5) may include a first housing, a second housing disposed to be able to move in a first direction or second direction with regard to the first housing, a driving device (for example, driving device 530 in FIG. 5) driven so as to move the second housing with regard to the first housing, a display (for example, display module 160 in FIG. 1, display 510 in FIG. 5) having a first display area when the second housing moves in the first direction with regard to the first housing, the display being expanded to the first display area and a second display area when the second housing is moved by the driving device from the first housing in the second direction, and a processor (for example, processor 120 in FIG. 1, processor 520 in FIG. 5) operatively connected to the display and the driving device. The processor may be configured to analyze a spatial element from a background image corresponding to the first display area so as to derive a virtual first space in which an avatar is to be expressed, in case that an active area in which visual information is displayed on the display is the first display area during avatar service execution, and provide, in the first display area, an avatar in a first posture which can be expressed in the first space, based on characteristic information of the avatar, analyze a spatial element from a background image corresponding to the first display area and the second display area so as to derive a virtual second space, based on expansion of the active area of the display from the first display area to at least a part of the second display area, and provide at least one of an expansion service function and an avatar in a second posture which can be expressed in the second space, based on characteristic information of the avatar.

According to various embodiments, a flexible electronic device (for example, electronic device 101 in FIG. 1, electronic device 101 in FIG. 5) may include a first housing, a second housing disposed to be able to move in a first direction or second direction with regard to the first housing, a driving device (for example, driving device 530 in FIG. 5) driven so as to move the second housing with regard to the first housing, a display (for example, display module 160 in FIG. 1, display 510 in FIG. 5) having a first display area when the second housing moves in the first direction with regard to the first housing, the display being expanded to the first display area and a second display area when the second housing is moved by the driving device from the first housing in the second direction, and a processor (for example, processor 120 in FIG. 1, processor 520 in FIG. 5) operatively connected to the display and the driving device. The processor 120, 520 may be configured to acquire a background image to be displayed during avatar service execution, track the area of an active area in which visual information is to be displayed on the display, based on the state of the electronic device, determine a cutoff area from the acquired background image so as to correspond to the area of the active area, derive a virtual spatial range in which an avatar is to be expressed by analyzing a spatial element included in the determined cutoff area, generate an avatar service UI by selecting avatar contents which can be expressed in the spatial range, based on characteristic information of the avatar, and provide the generated avatar service UI on the background image in the cutoff area.

According to various embodiments, the processor 120, 520 may be further configured to acquire a background image, derive the first space by determining a first cutoff area having a size corresponding to the first display area from the background image and analyzing a spatial element in the first cutoff area, and derive the second space by determining a second cutoff area having a size corresponding to the first display area and the second display area from the background image and analyzing a spatial element in the second cutoff area.

According to various embodiments, the background image may include at least one of a real image acquired through a camera or a rendered virtual reality space image.

According to various embodiments, the spatial element may include at least one of a floor, a wall, a ceiling, and an object, the processor may be configured to analyze at least one of the size, area, height, and distance of the spatial element so as to calculate the area of a floor on which the avatar is to be positioned from the background image, and determine x-axis, y-axis, and z-axis values of a first space or a second space with reference to the area of the floor.

According to various embodiments, the avatar characteristic information may include at least one piece of information among the size of legs, arms, body, and face of the avatar, an avatar motion, an avatar animation activity, or an avatar posture.

According to various embodiments, the processor 120, 520 may be further configured to select avatar contents which can be expressed in the first space, based on the active area being a first display area, so as to configure a first avatar service user interface, provide the avatar in a first posture to the first avatar service user interface, select avatar contents which can be expressed in the second space, based on the active area being expanded from the first display area to at least a part of the second display area, so as to configure a second avatar service user interface, and provide the avatar in a second posture to the second avatar service user interface.

According to various embodiments, the processor 120, 520 may be further configured such that the second avatar service user interface provides an expansion service function corresponding to the expanded active area.

According to various embodiments, the expansion service function may include at least one of a different avatar display function by which an avatar different from a main avatar can be additionally displayed, a cloning function by which a clone of the main avatar can be provided, and an avatar interaction function by which an additional function can be executed through interaction with an avatar.

According to various embodiments, the first avatar service user interface may include motion items which can be expressed in the first space, the second avatar service user interface may include motion items which can be expressed in the second space, and the processor 120, 520 may be further configured such that, when the first avatar service user interface includes motion items which cannot be expressed in the first space, the motion items which can be expressed in the first space and the motion items which cannot be expressed are differently processed visually.

According to various embodiments, the processor 120, 520 may be further configured such that, when the first avatar service user interface includes motion items which cannot be expressed in the first space, information indicating that some of the motion items cannot be expressed, or information guiding expansion of the display from the first display area to at least a part of the second display area is provided.

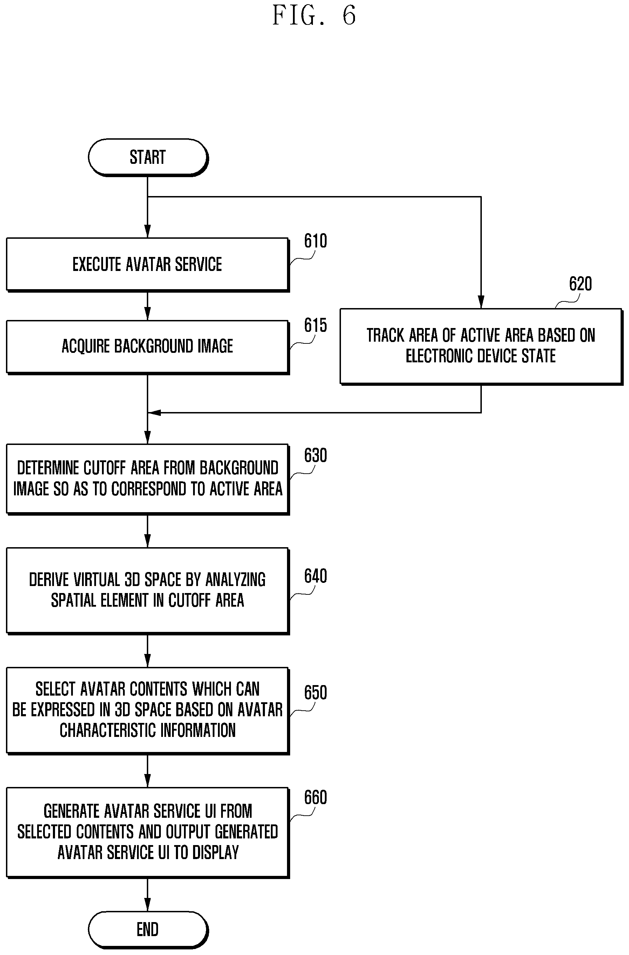

FIG. 6 illustrates a method for operating an avatar by a flexible electronic device according to some embodiments.

Referring to FIG. 6, a processor (for example, processor 120 in FIG. 1, processor 520 in FIG. 5) of an electronic device 101 according to an embodiment may sense a service execution request related to an avatar installed in the electronic device 101 in operation 610.

For example, if a user touches an avatar application (for example, avatar animation app, augmented reality app, virtual reality app), an execution process of an avatar-related application may start. The avatar animation app may be understood as an application supporting avatar character, an emoji/animation sticker, an avatar-related function.

In operation 615, the processor 520 may acquire a background image to be displayed on an avatar app screen.

For example, the background image may be an image corresponding to a content type, and may be a real image using a camera, or a virtual reality background image rendered from a server or an electronic device 1001.

According to an embodiment, in the case of an augmented reality service, the processor may activate a camera and may acquire a preview image acquired from the camera as a background image.

According to another embodiment, in the case of a virtual reality image, the processor may render virtual reality space contents and may acquire a rendering virtual reality space image as the background image.

In operation 620, the processor 520 may track the area of the active area of the display, based on the state of the electronic device. As described above with reference to FIG. 2, the active area in which visual information is to be displayed in connection with the display, may be determined to be the first display area A1, a part of the first display area A1 and the second display area A2, or the entire area (for example, first display area A1 and second display area A2) of the display.

The processor 520 may recognize the state of the electronic device by using data received from a display, a driving device, or a sensor, and may track the area of the active area determined based on the state of the electronic device 101. For example, the processor 520 may track the area including the first display area and the second display area according to the area of the first display area A1 and the degree of expansion of the second display area A2 in the display.

In operation 630, the processor 520 may determine a cutout area (or crop area) of the background image so as to correspond to the tracked area of the active area. The cutout area may be a part of the background image. The cutout area may be a view area corresponding to the size of the active area in which visual information is to be displayed in the entire background image.

In operation 640, the processor 520 analyzes spatial elements in the cutoff area, thereby deriving a virtual 3D space in which an avatar is to be expressed. The virtual 3D space is any space used to position or dispose an avatar on the display, and may not be displayed on the display as a visual element, but is not limited thereto, and may also be expressed as a visual element at the user's request.

According to an embodiment, the processor 520 may recognize spatial elements (for example, a floor, a wall, a ceiling, an object) in the cutoff area and may analyze parameter values (for example, size, area, height, distance) of respective spatial elements. For example, based on the area of the floor surface in the cutoff area, the processor 520 may determine x, y, z-axis values for the virtual 3D space.

In operation 650, the processor 520 may select avatar contents that can be expressed in the 3D space, based on avatar characteristic information.

According to an embodiment, the processor 520 positions an avatar in the virtual 3D space of the cutoff area, based on characteristic information (for example, the size of the legs, arms, body, and face of the avatar, avatar motions, avatar animation activities, avatar postures) of the avatar (for example, a default avatar or an avatar designated by the user), and may select avatar contents that can be expressed in the derived virtual 3D space. The avatar contents may include at least one of the avatar's motion, activity, animation behavior, or function.

In operation 660, the processor 520 may generate an avatar service UI corresponding to the current display size, based on selected avatar contents, and may display the generated avatar service UI in the active area of the display.

According to an embodiment, the processor 520 may display a background image of a cutoff area on the display, and may display avatar contents in a first posture selected according to a virtual 3D space derived from the cutoff area.

According to an embodiment, the processor 520 may display designated contents randomly or according to a priority among the avatar contents selected according to the virtual 3D space.

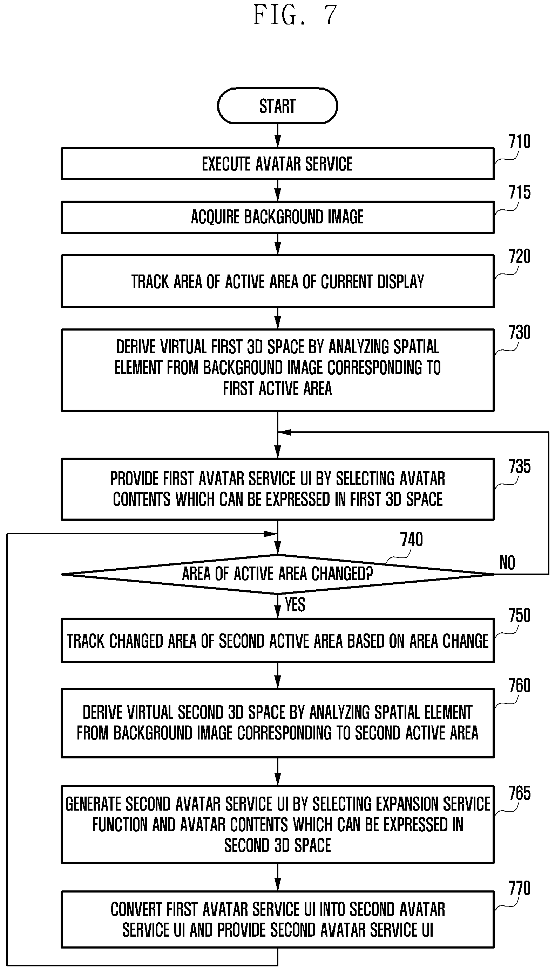

FIG. 7 illustrates a method for operating an avatar by a flexible electronic device according to some embodiments.

Referring to FIG. 7, a processor (for example, processor 120 in FIG. 1, processor 520 in FIG. 5) of an electronic device 101 according to an embodiment may sense a service execution request related to an avatar installed in the electronic device 101 in operation 710.

In operation 715, the processor 520 may acquire a background image to be displayed on an avatar app screen. For example, the background image may be an image corresponding to a content type, and may be a real image using a camera, or a virtual reality background image rendered from a server or an electronic device.

In operation 720, the processor 520 may track the area of the active area of the display, based on the state of the electronic device.

The processor 520 may recognize the state of the electronic device by using data received from a display, a driving device, or a sensor, and may track the area of the active area determined based on the state of the electronic device 101.

In operation 730, the processor 520 analyzes spatial elements from a background image corresponding to the area of the tracked active area (for example, first active area), thereby deriving a virtual 3D space. The virtual 3D space is any space used to position or dispose an avatar on the display, and may not be displayed on the display as a visual element, but is not limited thereto, and may also be expressed as a visual element at the user's request.

The processor 520 may recognize spatial elements (for example, a floor, a wall, a ceiling, an object) and may analyze parameter values (for example, size, area, height, distance) of respective spatial elements. For example, based on the area of the floor surface in the cutoff area, the processor 520 may determine x, y, z-axis values for the virtual 3D space.

According to an embodiment, the processor 520 may respond in real time so as to provide a background image conforming to the size of the first active area to the display. The processor 520 may acquire or render a background image conforming to the size of the first active area and may provide the same to the display.

According to another embodiment, the processor 520 may determine a cutoff area conforming to the area of a tracked first active area, based on the acquired background image, and may analyze spatial elements in the cutoff area, thereby deriving a virtual first 3D space.

In operation 735, the processor 520 may select avatar contents to be expressed in the first 3D space, based on avatar characteristic information, thereby providing a first avatar service UI corresponding to the first active area. The first avatar service UI may include an avatar in a first posture expressed in the first 3D space.

The processor 520 may position an avatar in the first 3D space, based on characteristic information (for example, the size of the legs, arms, body, and face of the avatar, avatar motions, avatar animation activities, avatar postures) of a default avatar or an avatar designated by the user, and may select avatar contents that can be expressed in the first 3D space. The avatar contents may include at least one of the avatar's motion, activity, animation behavior, or function. The processor 520 may generate an avatar service UI, based on the selected avatar contents.

In operation 740, the processor 520 senses a change in area of the active area.

In operation 750, the processor 520 may track the area of a second active area changed based on a change in the active area.

According to an embodiment, the processor 520 may respond in real time to a change of the electronic device 101 from a first state to a second change, thereby determining an active area, and may track the area of the active area in real time. The processor 520 may sense a change of the electronic device 101 from a closed state to an open state or vice versa, and may determine an active area in response to the degree of expansion or reduction.

In operation 760, the processor 520 analyzes spatial elements from a background image corresponding to the changed area of the second active area, thereby deriving a virtual second 3D space.

The processor 520 may recognize spatial elements (for example, a floor, a wall, a ceiling, an object) and may analyze parameter values (for example, size, area, height, distance) of respective spatial elements. For example, based on the area of the floor surface in the cutoff area, the processor 520 may determine x, y, z-axis values for the virtual 3D space.

According to an embodiment, the processor 520 may respond in real time so as to provide a background image conforming to the changed size of the second active area to the display. The processor 520 may acquire or render a background image conforming to the size of the second active area and may provide the same to the display.

According to another embodiment, the processor 520 may determine a cutoff area conforming to the changed area of the second active area, and may analyze spatial elements in the cutoff area, thereby deriving a virtual second 3D space.

In operation 765, the processor 520 selects an expansion service function and avatar contents to be displayed in the second 3D space, based on avatar characteristic information, thereby generating a second avatar service UI corresponding to the second active area. The second avatar service UI may include an avatar in a second posture expressed in the second 3D space.

The processor 520 may respond in real time so as to position an avatar in the second 3D space, based on characteristic information (for example, the size of the legs, arms, body, and face of the avatar, avatar motions, avatar animation activities, avatar postures) of a default avatar or an avatar designated by the user, and may select avatar contents that can be expressed in the second 3D space. The processor 520 may provide an expansion service function conforming to the second active area, based on a change from the first active area to the second active area. The expansion service function may include at least one of a different avatar display function by which an avatar different from a main avatar can be additionally displayed, a cloning function by which a clone of the main avatar can be provided, and an avatar interaction function by which an additional function can be executed through interaction with an avatar, but is not limited thereto.

In operation 770, the processor 520 converts the first avatar service UI to the second avatar service UI and may output the same to the display, in response to a change of the electronic device 101 from a first state to a second state.

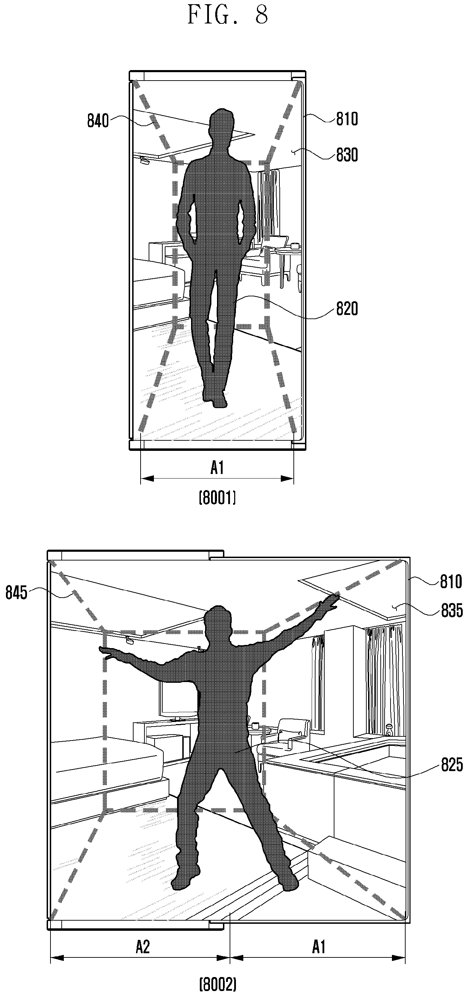

FIG. 8 illustrates an example of an avatar operating screen of a flexible electronic device according to an embodiment.

Referring to FIG. 8, an electronic device 101 according to an embodiment may vary an active area in which visual information is to be displayed, based on the state (for example, first state or second state) of the electronic device 101, and may provide an avatar service variably according to the size of the active area.

According to an embodiment, a processor (for example, processor 120 in FIG. 1, processor 520 in FIG. 5) may determine, based on the closed state (for example, first state) of the electronic device 101, that the first display area A1 of the display 810 is the active area as indicated by <8001>, and may provide an avatar 820 in a first posture through the display 810 in the first active area A1. For example, the processor of the electronic device 101 may derive a virtual first 3D space 840 from a background image (for example, a virtual image or a part of a camera preview image) 830 corresponding to the size of the first display area A1, and may provide an avatar 820 in a first posture which can be expressed without deviating from the first 3D space 840.

The avatar 820 in the first posture is described as having a posture which can be expressed within the range of activity in the first 3D space, but is not limited thereto. For example, the first posture may refer to a posture in which the legs and arms of the avatar are not outside of the active area (first display area A1).

Based on a transition of the electronic device 101 from a closed state (for example, first state) to an open state (for example, second state), the active area may be expanded from the first display area A1 to the entire area (first display area A1 and second display area A2) of the display 810.

In response to determining the first display area A1 and the second display area A2 as the active area, the processor of the electronic device 101 may provide avatar 825, which has changed to a second posture such that the same can be expressed in the first display area A1 and the second display area A2, through the display in the first display area A1 and the second display area A2.

For example, after the change, the processor of the electronic device 101 may derive a virtual second 3D space 845 from a background image (for example, a virtual image or a part of a camera preview image) 835 corresponding to the size of the first display area A1 and the second display area A2, and may switch to and provide an avatar 820 in a second posture which can be expressed without deviating from the second 3D space 845.

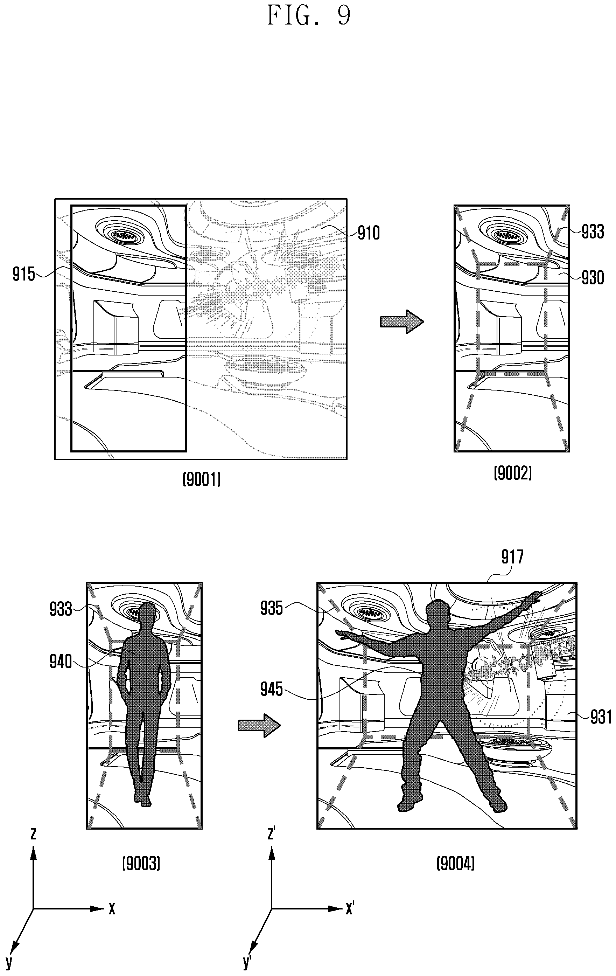

FIG. 9 illustrates an example of an avatar operating screen of a flexible electronic device according to an embodiment.

Referring to FIG. 9, a processor (for example, processor 120 in FIG. 1, processor 520 in FIG. 5) of an electronic device 101 according to an embodiment may support a virtual reality service.

When the virtual reality service is executed, the processor of the electronic device 101 may render virtual reality contents 910 as indicated by <9001>. For example, the virtual reality contents 910 may be implemented as 360° images. For example, the 360° images may be fabricated through a 360° panoramic imaging technique or a stitching editing technique, but are not limited thereto.

When the electronic device is in a closed state, the processor may crop the space of the virtual reality contents 910 indicated by <9001>, thereby obtaining a section view corresponding to a first active area 915.

The processor may derive a three-dimensional first virtual space 933, in which an avatar is to be expressed, inside a first slice image 930 in the section view obtained through cropping, as indicated by <9002>. The first virtual space 933 may have first x, y, z-axis values.

The processor may select avatar contents expressed within the range of the first virtual space 933 of the first slice image 930, thereby displaying an avatar 940 in a first posture as indicated by <9003>.

Based on a change of the electronic device 101 from the closed state to an open state, the processor may sense a change of the active area from the first active area 915 to a second active area 917.

As indicated by <9004>, the space of the virtual reality contents 910 may be cropped to have a size corresponding to the second active area 917, and a three-dimensional second virtual space 935 may be derived so as to express an avatar inside the second slice image 931 obtained by cropping. The second virtual space 935 may have x', y', z'-axis values. The processor may select avatar contents expressed within the range of the second virtual space 935 of the second slice image 931 and may display an avatar 945 in a second posture.

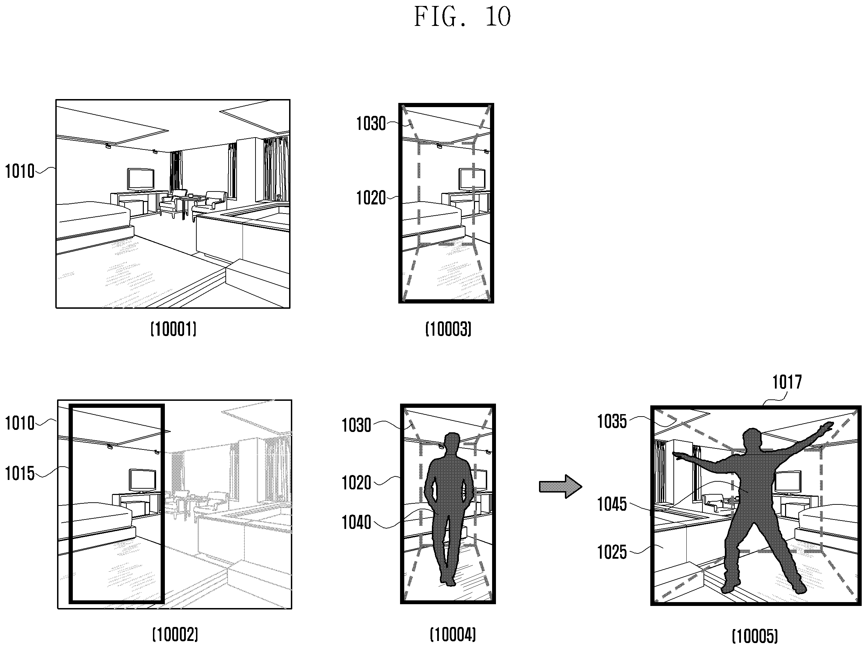

FIG. 10 illustrates an example of an avatar operating screen of a flexible electronic device according to an embodiment.

Referring to FIG. 10, a processor (for example, processor 120 in FIG. 1, processor 520 in FIG. 5) of an electronic device 101 according to an embodiment may support an augmented reality service or a mixed reality service.

When the augmented reality service or mixed reality service is executed, the processor may execute a camera so as to acquire a real image, as indicated by <10001>. For example, the real image indicated by <10001> may have a range or size such that the same can be acquired by the angle of view of a camera image sensor.

When the augmented reality service is executed in a closed state of the electronic device, the processor may crop the real image 1010 indicated by <10002>, thereby obtaining a section view corresponding to a first active area 1015.

The processor may derive a three-dimensional first virtual space 1030, in which an avatar is to be expressed, inside a first slice image 1020 sized to correspond to the first active area 1015 through cropping, as indicated by <10003>. The first virtual space 1030 may have first x, y, z-axis values.

The processor may select avatar contents expressed within the range of the first virtual space 1030 of the first slice image 1020, thereby displaying an avatar 1040 in a first posture as indicated by <10004>.

Based on a change of the electronic device 101 from the closed state to an open state, the processor may sense a change of the active area from the first active area 1015 to a second active area 1017.

As indicated by <10005>, a three-dimensional second virtual space 1035 may be derived so as to express an avatar from a second slide image 1025 sized to correspond to the second active area 1017 by cropping the real image 1010, as indicated by <10005>. The second virtual space 1035 may have x', y', z'-axis values. The processor may select avatar contents expressed within the range of the second virtual space 1035 of the second slice image 1025 and may display an avatar 1045 in a second posture.

In the following drawings, descriptions of components overlapping those in FIG. 10 will be omitted or made brief.

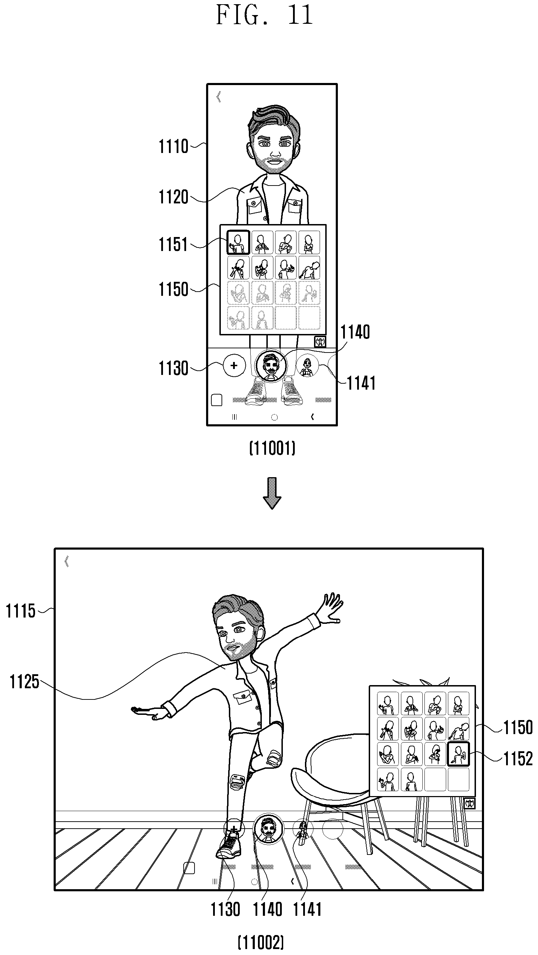

FIG. 11 illustrates an example of an avatar operating screen of a flexible electronic device according to an embodiment.

Referring to FIG. 11, a processor (for example, processor 120 in FIG. 1, processor 520 in FIG. 5) of an electronic device 101 according to an embodiment may provide an avatar 1120 in a first posture, as indicted by <110001>, through a first avatar service UI 1110, based on the electronic device 101 being in a closed state. The first avatar service UI1110 may include avatar contents selected so as to correspond to the size of a first active area.

The first avatar service UI 1110 may include an avatar 1120 in a first posture, an avatar addition item 1130, and avatar list items 1140, 1141. The avatar 1120 in a first posture may correspond to avatar contents selected according to the size of the first active area. When the user selects (for example, selects) the avatar addition item 1130, the processor may enter a menu such that a new avatar can be added. An avatar selected from the avatar list items 1140, 1141 may be designated as a main avatar.

When the user selects (for example, touches) the main avatar, for example, the avatar 1120 in a first posture, in a first state, the processor may provide a motion UI 1150 including avatar contents that can be expressed with the size of the first active area.

According to an embodiment, the motion UI1150 may include motion items 1151 that can be expressed with the size of the first active area in response to the electronic device 101 being in a closed state, but is not limited thereto.

According to some embodiments, when the motion UI 1150 includes motion items 1151 that cannot be expressed with the size of the first active area, the processor may visually display them (for example, add oblique lines thereto) differently from the motion items 1151 that can be expressed. Alternatively, when the motion UI 1150 includes motion items 1151 that cannot be expressed with the size of the first active area, the processor may provide information indicating that some of the motion items 1151 cannot be expressed, or information for guiding expansion of the display from the first display area to at least a part of the second display area.

The processor may respond in real time to a change of the electronic device 101 from the closed state to an open state so as to switch to a second avatar service UI screen 1115, as indicated by <11002>, thereby providing an avatar 1125 in a second posture.

The second avatar service UI screen 1115 may include avatar contents selected so as to correspond to the changed active area size. The second avatar service UI screen 1115 may switch from the avatar 1120 in a first posture to the avatar 1125 in a second posture, and may switch to a background image so as to correspond to the changed active area size (or to a slice image cut to the changed active area size). The avatar addition item 1130 and the avatar list items 1140, 1141 may be identical to those of the first avatar service UI1110.

When the user selects (for example, touches) the avatar 1125 in a second posture from the second avatar service UI screen 1115, the processor may provide a motion UI1150 including avatar contents that can be expressed with the changed active area size. In this case, the motion UI 1150 may be configured such that motion items 1152 that cannot be expressed in the closed state are activated into an expressible state, in response to the electronic device 101 being in an open state. The user may select (for example, touch) a motion item 1152 that can be expressed in the open state such that the avatar can be variously expressed in the changed active area.

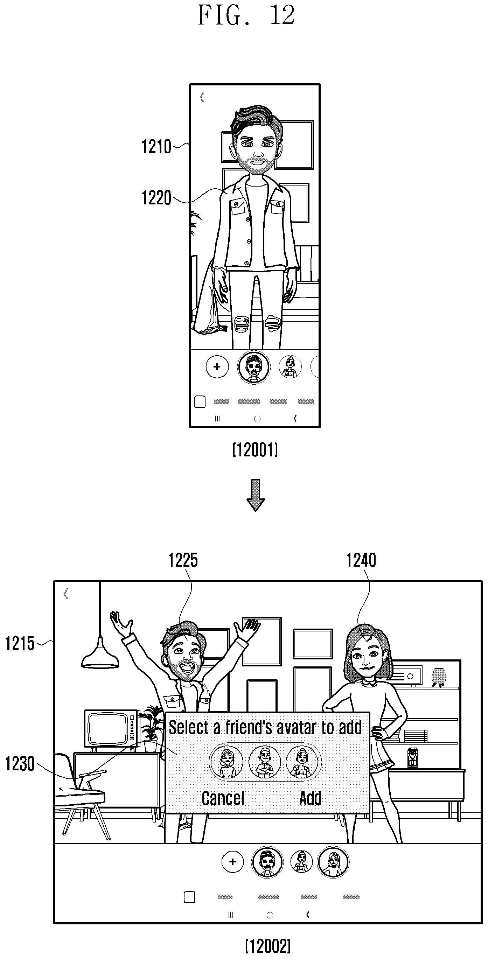

FIG. 12 illustrates an example of an avatar operating screen of a flexible electronic device according to an embodiment.

Referring to FIG. 12, a processor (for example, processor 120 in FIG. 1, processor 520 in FIG. 5) of an electronic device 101 according to an embodiment may provide a different avatar display function, based on a transition of the electronic device 101 from a first state to a second state.

Based on the electronic device 101 being in a closed state, the processor may provide a first avatar service UI 1210 including an avatar 1220 in a first posture through a first active area, as indicated by <12001>.

The processor may respond in real time to a change of the electronic device 101 from the closed state to an open state so as to switch to a second avatar service UI screen 1215, as indicated by <12002>, thereby providing an avatar 1225 in a second posture and a second avatar service UI service screen 1215 to a display in a second active area. A different avatar additional display UI 1230 may include guide information, an avatar list, an addition cancel item, and an addition approval item. When the user selects (for example, touches) an avatar to be displayed as a main avatar, the processor may provide a different avatar 1240 on the second avatar service UI screen 1215.

According to some embodiments, the processor may respond in real time to a change of the electronic device 101 from the closed state to an open state so as to additionally provide a clone avatar, which is a clone of the avatar (for example, avatar) displayed on the display. In this case, the number of clone avatars may vary depending on the changed size (or degree of expansion) of the active area.

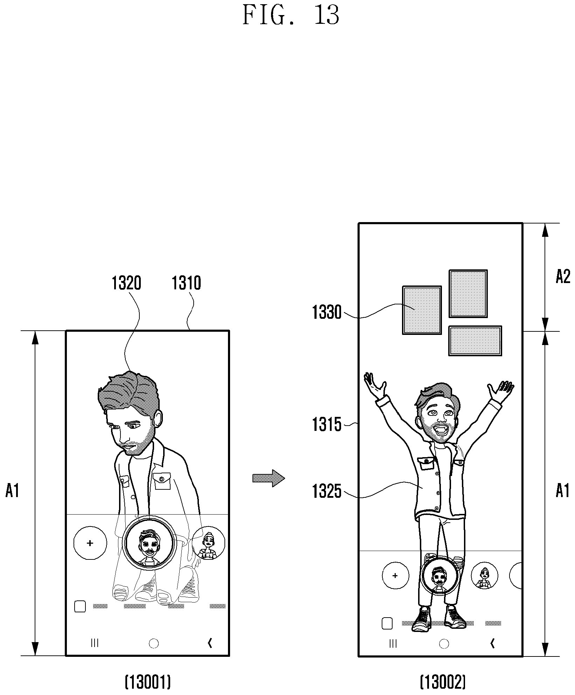

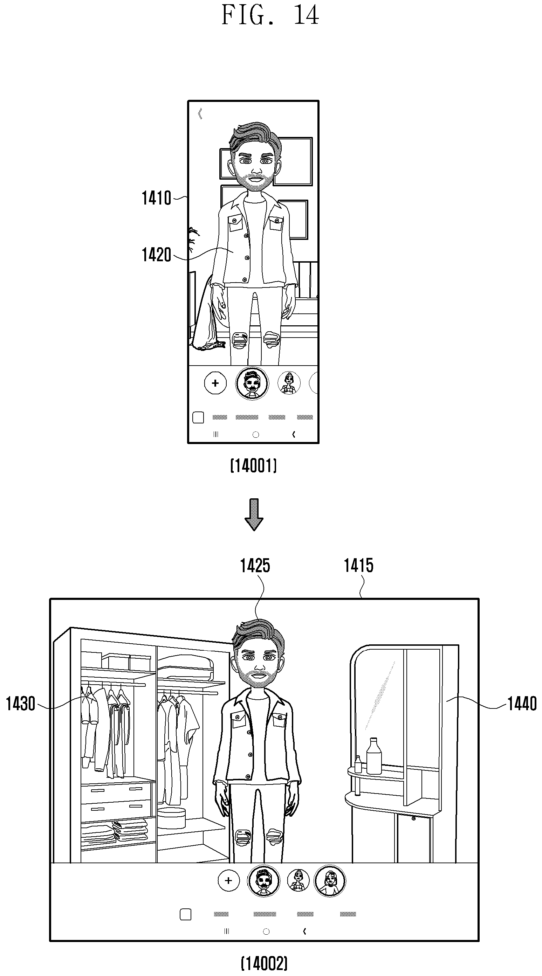

FIG. 13 and FIG. 14 illustrate an example of an avatar operating screen of a flexible electronic device according to an embodiment.

Referring to FIG. 13 and FIG. 14, a processor (for example, processor 120 in FIG. 1, processor 520 in FIG. 5) of an electronic device 101 according to an embodiment may provide an avatar interaction function, based on a transition of the electronic device 101 from a first state to a second state.

When the electronic device 101 according to an embodiment is an up-rollable electronic device as illustrated in FIG. 13, the display, in a closed state, may determine that the first display area A1 is the active area. Based on the electronic device 101 being in a closed state, the processor may provide a first avatar service UI screen 1310 including an avatar 1320 in a first posture through the first display area A1, as indicated by <13001>.

The processor may respond in real time to a change of the electronic device 101 from the closed state to an open state in which the same is rolled up, and the display may thus determine the first display area A1 and the second display area A2 as the active area. The processor may respond in real time to a transition of the electronic device 101 from open state to the closed state so as to switch to a second avatar service UI1315 as indicated by <13002>, thereby providing an avatar 1325 in a second posture through the first display area A1 and the second display area A2.

According to an embodiment, as the area of the active area in which visual information is to be displayed is expanded, the processor may provide an avatar-related expansion service function, for example, avatar user interaction function item 1330.

When the user selects the avatar user interaction function item 1330 by moving the avatar's hand, the processor may execute a function designated for the avatar user interaction function item 1330.

According to some embodiments, when the electronic device 101 is a side rollable electronic device as illustrated in FIG. 14, the processor may provide a first avatar service UI screen 1410 including an avatar 1410 in a first posture, as indicted by <14001>, based on the electronic device 101 being in a closed state. The processor may respond in real time to a change of the electronic device 101 from the closed state to an open state in which the same is side-rolled so as switch to a second avatar service UI screen 1415, thereby providing an avatar 1425 in a second posture, a wardrobe interaction item 1430, and a makeup interaction item 1440.

For example, when the user has selected the wardrobe interaction item 1430 or has moved to the wardrobe interaction item 1430 by using the avatar's hand, the processor may execute an avatar wardrobe function, thereby entering a menu such that the avatar's clothes can be changed. As another example, when the user has selected the wardrobe interaction item 1430 or has moved to the makeup interaction item 1440 by using the avatar's hand, the processor may execute an avatar makeup function, thereby entering a menu such that the avatar's face can be changed.

According to various embodiments, a method for operating an avatar by a flexible electronic device (for example, electronic device 101 in FIG. 1, electronic device 101 in FIG. 5) may include an operation of receiving an avatar service execution request through a display (for example, display module 160 in FIG. 1, display 510 in FIG. 5) having a first display area when a second housing moves in a first direction with regard to a first housing, the display being expanded to the first display area and a second display area when the second housing moves from the first housing in a second direction, an operation of deriving a virtual first space in which an avatar is to be expressed by analyzing a spatial element from a background image corresponding to the first display area in response to the avatar service execution request, in case that an active area in which visual information is displayed on the display is the first display area, an operation of displaying, in the active area which is the first display area, an avatar in a first posture which can be expressed in the first space, based on characteristic information of the avatar, an operation of deriving a virtual second space by analyzing a spatial element from a background image corresponding to the first display area and the second display area, based on expansion of the active area of the display from the first display area to at least a part of the second display area, and an operation of displaying, in the active area corresponding to the first display area and the second display area, at least one of an expansion service function and an avatar in a second posture which can be expressed in the second space, based on characteristic information of the avatar.

According to various embodiments, in the operation of deriving a first space, the first space may be derived by determining a first cutoff area having a size corresponding to the first display area from the background image and analyzing a spatial element in the first cutoff area, and in the operation of deriving a second space, the second space may be derived by determining a second cutoff area having a size corresponding to the first display area and the second display area from the background image and analyzing a spatial element in the second cutoff area.

According to various embodiments, the background image may include a real image acquired through a camera or a rendered virtual reality space image.

According to various embodiments, the spatial element may include at least one of a floor, a wall, a ceiling, and an object, the operation of deriving a first space or a second space may further include an operation of analyzing at least one of the size, area, height, and distance of the spatial element so as to calculate the area of a floor on which the avatar is to be positioned from the background image, and determining x-axis, y-axis, and z-axis values of the first space or the second space with reference to the area of the floor.

According to various embodiments, the avatar characteristic information may include at least one piece of information among the size of legs, arms, body, and face of the avatar, an avatar motion, an avatar animation activity, or an avatar posture.

According to various embodiments, the method may further include an operation of configuring a first avatar service user interface by selecting avatar contents which can be expressed in the first space, based on the active area of the display being the first display area, and an operation of configuring a second avatar service user interface by selecting avatar contents which can be expressed in the second space, based on the active area of the display being expanded from the first display area to at least a part of the second display area.

According to various embodiments, the second avatar service user interface may further include an expansion service function corresponding to the expanded active area, and the expansion service function may include at least one of a different avatar display function by which an avatar different from a main avatar can be additionally displayed, a cloning function by which a clone of the main avatar can be provided, and an avatar interaction function by which an additional function can be executed through interaction with an avatar.

According to various embodiments, the first avatar service user interface may include motion items which can be expressed in the first space, the second avatar service user interface may include motion items which can be expressed in the second space, and the operation of configuring a first avatar service user interface may be configured such that, when motion items which cannot be expressed in the first space are included, the motion items which can be expressed in the first space and the motion items which cannot be expressed are differently processed visually.

According to various embodiments, the operation of configuring a first avatar service user interface may be configured to further include, in case that the first avatar service user interface includes motion items which cannot be expressed in the first space, information indicating that some of the motion items cannot be expressed, or information guiding expansion of the display from the first display area to at least a part of the second display area.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A flexible electronic device comprising:
a first housing (210);
a second housing disposed to be able to perform a sliding movement in a first direction or second direction with regard to the first housing;
a driving device (530) driven so as to move the second housing with regard to the first housing;
a display (510) having a first display area (A1) in case that the second housing moves in the first direction with regard to the first housing, the display being expanded to the first display area (A1) and a second display area (A2) in case that the second housing is moved by the driving device from the first housing in the second direction; and
a processor (550) operatively connected to the display (510) and the driving device (530),
wherein the processor (550) is configured to:
analyze a spatial element of a virtual first space in which an avatar is to be expressed from a first background image of a size corresponding to the first display area (A1) in case that an area in which visual information is displayed on the display has the first display area (A1) during avatar service execution, and select and provide, in the first display area (A1), an avatar in a first posture which can be expressed in the virtual first space, based on the spatial element of the virtual first space and characteristic information of the avatar,
analyze a spatial element of a virtual second space from a second background image of a size of corresponding to the first display area (A1) and the second display area (A2), in case that expansion of the display from the first display area (A1) to at least a part of the second display area (A2) is sensed; and
select and provide, in the first display area (A1) and the second display area (A2), at least one of an expansion service function and an avatar in a second posture which can be expressed in the virtual second space, based on the spatial element of the virtual second space and the characteristic information of the avatar.

2. The flexible electronic device of claim 1, wherein the first background image comprises a first cutoff area cropped to a size corresponding to the first display area (A1) from at least one of a real image acquired through a camera or a rendered virtual reality space image, and the second background image comprises a second cutoff area cropped to a size corresponding to the first display area (A1) and the second display area (A2) from the at least one of the real image acquired through the camera or the rendered virtual reality space image.

3. The flexible electronic device of any of the preceding claims, wherein the characteristic information comprises at least one piece of information among the size of legs, arms, body, and face of the avatar, an avatar motion, an avatar animation activity, or an avatar posture, and the spatial element comprising at least one of a floor, a wall, a ceiling, and an object, and
wherein the processor (550) is configured to:
analyze at least one of the size, area, height, and distance of the spatial element so as to calculate the area of a floor on which the avatar is to be positioned from one of the first background image and the second background image; and
determine x-axis, y-axis, and z-axis values of the virtual first space or the virtual second space with reference to the area of the floor.

4. The flexible electronic device of any of the preceding claims, wherein the processor (550) is further configured to:
select avatar contents which can be expressed in the virtual first space, based on the display having the first display area (A1), so as to configure a first avatar service user interface, and provide the avatar in the first posture to the first avatar service user interface; and
select avatar contents which can be expressed in the virtual second space, based on the display being expanded from the first display area (A1) to at least a part of the second display area (A2), so as to configure a second avatar service user interface, and provide the avatar in the second posture to the second avatar service user interface.

5. The flexible electronic device of claim 4, wherein the processor (550) is configured such that the second avatar service user interface comprises an expansion service function, and the expansion service function comprises at least one of a different avatar display function by which an avatar different from a main avatar is additionally displayed, a cloning function by which a clone of the main avatar is provided, and an avatar interaction function by which an additional function is executed through interaction with an avatar.

6. The flexible electronic device of claim 4 or 5, wherein the first avatar service user interface comprises motion items which can be expressed in the virtual first space, and the second avatar service user interface comprises motion items which can be expressed in the virtual second space, and
wherein the processor (550) is further configured such that, in case that the first avatar service user interface comprises motion items which cannot be expressed in the virtual first space, the motion items which can be expressed in the virtual first space and the motion items which cannot be expressed are differently processed visually.

7. The flexible electronic device of any of claims 4 to 6, wherein the processor (550) is further configured such that, in case that the first avatar service user interface comprises motion items which cannot be expressed in the virtual first space, information indicating that some of the motion items cannot be expressed, or information guiding expansion of the display from the first display area (A1) to at least a part of the second display area (A2) is provided.

8. A method for operating an avatar by a flexible electronic device comprising a first housing (210) and a second housing disposed to be able to perform a sliding movement in a first direction or second direction with regard to the first housing, the method comprising:
receiving an avatar service execution request through a display (550) having a first display area (A1) in case that the second housing moves in a first direction with regard to the first housing, the display (550) being expanded to the first display area (A1) and a second display area (A2) in case that the second housing moves from the first housing in a second direction;
analyzing a spatial element of a first virtual first space in which an avatar is to be expressed from a first background image corresponding to the first display area (A1) in response to the avatar service execution request, in case that an area in which visual information is displayed on the display has the first display area (A1);
selecting and displaying, in the first display area (A1), an avatar in a first posture which can be expressed in the virtual first space, based on the spatial element of the virtual first space and characteristic information of the avatar;
analyzing a spatial element of a second virtual space from a second background image corresponding to the first display area (A1) and the second display area (A2) in case that expansion of the display from the first display area (A1) to at least a part of the second display area (A2) is sensed; and
selecting and displaying, in the first display area (A1) and the second display area (A2), at least one of an expansion service function and an avatar in a second posture which can be expressed in the virtual second space, based on the spatial element of the virtual second space and the characteristic information of the avatar.

9. The method of claim 8, wherein the first background image comprises a first cutoff area cropped to a size corresponding to the first display area (A1) from at least one of a real image acquired through a camera or a rendered virtual reality space image, and the second background image comprises a second cutoff area cropped to a size corresponding to the first display area (A1) and the second display area (A2) from the at least one of the real image acquired through the camera or the rendered virtual reality space image.

10. The method of any of claims 8 or 9, wherein the characteristic information comprises at least one piece of information among the size of legs, arms, body, and face of the avatar, an avatar motion, an avatar animation activity, or an avatar posture, and the spatial element comprises at least one of a floor, a wall, a ceiling, and an object, and
wherein the analyzing a spatial element of the virtual first space or the virtual second space further comprises analyzing at least one of the size, area, height, and distance of the spatial element so as to calculate the area of a floor on which the avatar is to be positioned from the background image, and determining x-axis, y-axis, and z-axis values of the virtual first space or the virtual second space with reference to the area of the floor.

11. The method of any of claims 8 to 10, further comprising:
configuring a first avatar service user interface by selecting avatar contents which can be expressed in the virtual first space, based on the display being the first display area (A1); and
configuring a second avatar service user interface by selecting avatar contents which can be expressed in the virtual second space, based on the display being expanded from the first display area (A1) to at least a part of the second display area (A2).

12. The method of claim 11, wherein the second avatar service user interface further comprises an expansion service function, and the expansion service function comprises at least one of a different avatar display function by which an avatar different from a main avatar is additionally displayed, a cloning function by which a clone of the main avatar is provided, and an avatar interaction function by which an additional function is executed through interaction with an avatar.

13. The method of any of claim 11 or 12, wherein the first avatar service user interface comprises motion items which can be expressed in the virtual first space, and the second avatar service user interface comprises motion items which can be expressed in the virtual second space, and
wherein, in the configuring of a first avatar service user interface, in case that motion items which cannot be expressed in the virtual first space are included, the motion items which can be expressed in the virtual first space and the motion items which cannot be expressed are differently processed visually.

14. The method of any of claim 11 to 13, wherein the configuring of a first avatar service user interface further comprises, in case that the first avatar service user interface comprises motion items which cannot be expressed in the virtual first space, information indicating that some of the motion items cannot be expressed, or information guiding expansion of the display from the first display area (A1) to at least a part of the second display area (A2).

## Patentansprüche

1. Flexible elektronische Vorrichtung, umfassend:
ein erstes Gehäuse (210);
ein zweites Gehäuse, das dazu angeordnet ist, in Bezug auf das erste Gehäuse eine Gleitbewegung in einer ersten Richtung oder zweiten Richtung ausführen zu können;
eine Antriebsvorrichtung (530), die so angetrieben wird, dass sie das zweite Gehäuse in Bezug auf das erste Gehäuse bewegt;
eine Anzeige (510) mit einem ersten Anzeigebereich (A1), falls sich das zweite Gehäuse in Bezug auf das erste Gehäuse in der ersten Richtung bewegt, wobei die Anzeige auf den ersten Anzeigebereich (A1) und einen zweiten Anzeigebereich (A2) erweitert wird, falls das zweite Gehäuse durch die Antriebsvorrichtung von dem ersten Gehäuse in der zweiten Richtung bewegt wird; und
einen Prozessor (550), der operativ mit der Anzeige (510) und der Antriebsvorrichtung (530) verbunden ist,
wobei der Prozessor (550) dazu konfiguriert ist:
falls ein Bereich, in dem visuelle Information auf der Anzeige angezeigt wird, während einer Avatar-Dienstausführung den ersten Anzeigebereich (A1) aufweist, ein räumliches Element eines virtuellen ersten Raums, in dem ein Avatar darzustellen ist, aus einem ersten Hintergrundbild einer dem ersten Anzeigebereich (A1) entsprechenden Größe zu analysieren und basierend auf dem räumlichen Element des virtuellen ersten Raums und charakteristischer Information des Avatars einen Avatar in einer ersten Haltung, die in dem virtuellen ersten Raum dargestellt werden kann, in dem ersten Anzeigebereich (A1) auszuwählen und bereitzustellen,
falls Erweiterung der Anzeige von dem ersten Anzeigebereich (A1) auf mindestens einen Teil des zweiten Anzeigebereichs (A2) erfasst wird, ein räumliches Element eines virtuellen zweiten Raums aus einem zweiten Hintergrundbild einer dem ersten Anzeigebereich (A1) und dem zweiten Anzeigebereich (A2) entsprechenden Größe zu analysieren; und
basierend auf dem räumlichen Element des virtuellen zweiten Raums und der charakteristischen Information des Avatars mindestens eines aus einer Erweiterungsdienstfunktion und einem Avatar in einer zweiten Haltung, die in dem virtuellen zweiten Raum dargestellt werden kann, in dem ersten Anzeigebereich (A1) und dem zweiten Anzeigebereich (A2) auszuwählen und bereitzustellen.

2. Flexible elektronische Vorrichtung nach Anspruch 1, wobei das erste Hintergrundbild einen ersten Ausschnittbereich umfasst, der aus mindestens einem aus einem durch eine Kamera erhaltenen Realbild oder einem gerenderten Virtual-Reality-Raumbild auf eine dem ersten Anzeigebereich (A1) entsprechende Größe zugeschnitten ist, und das zweite Hintergrundbild einen zweiten Ausschnittbereich umfasst, der aus dem mindestens einen aus dem durch die Kamera erhaltenen Realbild oder dem gerenderten Virtual-Reality-Raumbild auf eine dem ersten Anzeigebereich (A1) und dem zweiten Anzeigebereich (A2) entsprechende Größe zugeschnitten ist.

3. Flexible elektronische Vorrichtung nach einem der vorhergehenden Ansprüche, wobei die charakteristische Information mindestens eine Information aus der Größe von Beinen, Armen, Körper und Gesicht des Avatars, einer Avatar-Bewegung, einer Avatar-Animationsaktivität oder einer Avatar-Haltung umfasst, und das räumliche Element mindestens eines aus einem Boden, einer Wand, einer Decke und einem Objekt umfasst, und
wobei der Prozessor (550) dazu konfiguriert ist:
mindestens eines aus der Größe, Bereich, Höhe und Abstand des räumlichen Elements zu analysieren, um den Bereich eines Bodens, auf dem der Avatar zu positionieren ist, aus einem des ersten Hintergrundbildes und des zweiten Hintergrundbildes zu berechnen; und
X-Achsen-, Y-Achsen- und Z-Achsen-Werte des virtuellen ersten Raums oder des virtuellen zweiten Raums unter Bezugnahme auf den Bereich des Bodens zu bestimmen.

4. Flexible elektronische Vorrichtung nach einem der vorhergehenden Ansprüche, wobei der Prozessor (550) ferner dazu konfiguriert ist:
basierend darauf, dass die Anzeige den ersten Anzeigebereich (A1) aufweist, Avatar-Inhalte, die in dem virtuellen ersten Raum dargestellt werden können, auszuwählen, um eine erste Avatar-Dienst-Benutzerschnittstelle zu konfigurieren, und den Avatar in der ersten Haltung auf der ersten Avatar-Dienst-Benutzerschnittstelle bereitzustellen; und
basierend darauf, dass die Anzeige von dem ersten Anzeigebereich (A1) auf mindestens einen Teil des zweiten Anzeigebereichs (A2) erweitert wird, Avatar-Inhalte, die in dem virtuellen zweiten Raum dargestellt werden können, auszuwählen, um eine zweite Avatar-Dienst-Benutzerschnittstelle zu konfigurieren, und den Avatar in der zweiten Haltung auf der zweiten Avatar-Dienst-Benutzerschnittstelle bereitzustellen.

5. Flexible elektronische Vorrichtung nach Anspruch 4, wobei der Prozessor (550) derart konfiguriert ist, dass die zweite Avatar-Dienst-Benutzerschnittstelle eine Erweiterungsdienstfunktion umfasst, und die Erweiterungsdienstfunktion mindestens eine aus einer verschiedenen Avatar-Anzeigefunktion, durch die ein von einem Haupt-Avatar verschiedener Avatar zusätzlich angezeigt wird, einer Klonfunktion, durch die ein Klon des Haupt-Avatars bereitgestellt wird, und einer Avatar-Interaktionsfunktion, durch die eine zusätzliche Funktion durch Interaktion mit einem Avatar ausgeführt wird, umfasst.

6. Flexible elektronische Vorrichtung nach Anspruch 4 oder 5, wobei die erste Avatar-Dienst-Benutzerschnittstelle Bewegungsoptionen umfasst, die in dem virtuellen ersten Raum dargestellt werden können, und die zweite Avatar-Dienst-Benutzerschnittstelle Bewegungsoptionen umfasst, die in dem virtuellen zweiten Raum dargestellt werden können, und
wobei der Prozessor (550) ferner derart konfiguriert ist, dass, falls die erste Avatar-Dienst-Benutzerschnittstelle Bewegungsoptionen umfasst, die in dem virtuellen ersten Raum nicht dargestellt werden können, die in dem virtuellen ersten Raum darstellbaren Bewegungsoptionen und die nicht darstellbaren Bewegungsoptionen visuell unterschiedlich verarbeitet werden.

7. Flexible elektronische Vorrichtung nach einem der Ansprüche 4 bis 6, wobei der Prozessor (550) ferner derart konfiguriert ist, dass, falls die erste Avatar-Dienst-Benutzerschnittstelle Bewegungsoptionen umfasst, die in dem virtuellen ersten Raum nicht dargestellt werden können, Information, die zeigt, dass einige der Bewegungsoptionen nicht dargestellt werden können, oder Information, die zur Erweiterung der Anzeige von dem ersten Anzeigebereich (A1) auf mindestens einen Teil des zweiten Anzeigebereichs (A2) anleitet, bereitgestellt wird.

8. Verfahren zum Betreiben eines Avatars durch eine flexible elektronische Vorrichtung, die ein erstes Gehäuse (210) und ein zweites Gehäuse umfasst, das dazu angeordnet ist, in Bezug auf das erste Gehäuse eine Gleitbewegung in einer ersten Richtung oder zweiten Richtung ausführen zu können, wobei das Verfahren umfasst:
Empfangen einer Avatar-Dienstausführungsanforderung über eine Anzeige (550) mit einem ersten Anzeigebereich (A1), falls sich das zweite Gehäuse in Bezug auf das erste Gehäuse in einer ersten Richtung bewegt, wobei die Anzeige (550) auf den ersten Anzeigebereich (A1) und einen zweiten Anzeigebereich (A2) erweitert wird, falls sich das zweite Gehäuse von dem ersten Gehäuse aus in einer zweiten Richtung bewegt;
als Reaktion auf die Avatar-Dienstausführungsanforderung, falls ein Bereich, in dem visuelle Information auf der Anzeige angezeigt wird, den ersten Anzeigebereich (A1) aufweist, Analysieren eines räumlichen Elements eines virtuellen ersten Raums, in dem ein Avatar darzustellen ist, aus einem ersten Hintergrundbild, das dem ersten Anzeigebereich (A1) entspricht;
Auswählen und Anzeigen eines Avatars in einer ersten Haltung, die in dem virtuellen ersten Raum dargestellt werden kann, in dem ersten Anzeigebereich (A1) basierend auf dem räumlichen Element des virtuellen ersten Raums und charakteristischer Information des Avatars;
falls Erweiterung der Anzeige von dem ersten Anzeigebereich (A1) auf mindestens einen Teil des zweiten Anzeigebereichs (A2) erfasst wird, Analysieren eines räumlichen Elements eines zweiten virtuellen Raums aus einem zweiten Hintergrundbild, das dem ersten Anzeigebereich (A1) und dem zweiten Anzeigebereich (A2) entspricht; und
Auswählen und Anzeigen, in dem ersten Anzeigebereich (A1) und dem zweiten Anzeigebereich (A2), von mindestens einem aus einer Erweiterungsdienstfunktion und einem Avatar in einer zweiten Haltung, die in dem virtuellen zweiten Raum dargestellt werden kann, basierend auf dem räumlichen Element des virtuellen zweiten Raums und der charakteristischen Information des Avatars.

9. Verfahren nach Anspruch 8, wobei das erste Hintergrundbild einen ersten Ausschnittbereich umfasst, der aus mindestens einem aus einem durch eine Kamera erhaltenen Realbild oder einem gerenderten Virtual-Reality-Raumbild auf eine dem ersten Anzeigebereich (A1) entsprechende Größe zugeschnitten ist, und das zweite Hintergrundbild einen zweiten Ausschnittbereich umfasst, der aus dem mindestens einen aus dem durch die Kamera erhaltenen Realbild oder dem gerenderten Virtual-Reality-Raumbild auf eine dem ersten Anzeigebereich (A1) und dem zweiten Anzeigebereich (A2) entsprechende Größe zugeschnitten ist.

10. Verfahren nach Anspruch 8 oder 9,
wobei die charakteristische Information mindestens eine Information aus der Größe von Beinen, Armen, dem Körper und Gesicht des Avatars, einer Avatar-Bewegung, einer Avatar-Animationsaktivität oder einer Avatar-Haltung umfasst, und das räumliche Element mindestens eines aus einem Boden, einer Wand, einer Decke und einem Objekt umfasst, und
wobei das Analysieren eines räumlichen Elements des virtuellen ersten Raums oder des virtuellen zweiten Raums ferner umfasst: Analysieren mindestens eines aus der Größe, Bereich, Höhe und Abstand des räumlichen Elements, um den Bereich eines Bodens, auf dem der Avatar zu positionieren ist, aus dem Hintergrundbild zu berechnen, und Bestimmen von X-Achsen-, Y-Achsen- und Z-Achsen-Werten des virtuellen ersten Raums oder des virtuellen zweiten Raums unter Bezugnahme auf den Bereich des Bodens.

11. Verfahren nach einem der Ansprüche 8 bis 10,
ferner umfassend:
Konfigurieren einer ersten Avatar-Dienst-Benutzerschnittstelle durch Auswählen von Avatar-Inhalten, die in dem virtuellen ersten Raum dargestellt werden können, basierend darauf, dass die Anzeige der erste Anzeigebereich (A1) ist; und
Konfigurieren einer zweiten Avatar-Dienst-Benutzerschnittstelle durch Auswählen von Avatar-Inhalten, die in dem virtuellen zweiten Raum dargestellt werden können, basierend darauf, dass die Anzeige von dem ersten Anzeigebereich (A1) auf mindestens einen Teil des zweiten Anzeigebereichs (A2) erweitert wird.

12. Verfahren nach Anspruch 11, wobei die zweite Avatar-Dienst-Benutzerschnittstelle ferner eine Erweiterungsdienstfunktion umfasst, und wobei die Erweiterungsdienstfunktion mindestens eine aus einer verschiedenen Avatar-Anzeigefunktion, durch die ein von einem Haupt-Avatar verschiedener Avatar zusätzlich angezeigt wird, einer Klonfunktion, durch die ein Klon des Haupt-Avatars bereitgestellt wird, und einer Avatar-Interaktionsfunktion, durch die eine zusätzliche Funktion durch Interaktion mit einem Avatar ausgeführt wird, umfasst.

13. Verfahren nach Anspruch 11 oder 12, wobei die erste Avatar-Dienst-Benutzerschnittstelle Bewegungsoptionen umfasst, die in dem virtuellen ersten Raum dargestellt werden können, und die zweite Avatar-Dienst-Benutzerschnittstelle Bewegungsoptionen umfasst, die in dem virtuellen zweiten Raum dargestellt werden können, und
wobei beim Konfigurieren einer ersten Avatar-Dienst-Benutzerschnittstelle, falls Bewegungsoptionen enthalten sind, die in dem virtuellen ersten Raum nicht dargestellt werden können, die in dem virtuellen ersten Raum darstellbaren Bewegungsoptionen und die nicht darstellbaren Bewegungsoptionen visuell unterschiedlich verarbeitet werden.

14. Verfahren nach einem der Ansprüche 11 bis 13, wobei das Konfigurieren einer ersten Avatar-Dienst-Benutzerschnittstelle ferner, falls die erste Avatar-Dienst-Benutzerschnittstelle Bewegungsoptionen umfasst, die in dem virtuellen ersten Raum nicht dargestellt werden können, Information, die zeigt, dass einige der Bewegungsoptionen nicht dargestellt werden können, oder Information, die zur Erweiterung der Anzeige von dem ersten Anzeigebereich (A1) auf mindestens einen Teil des zweiten Anzeigebereichs (A2) anleitet, umfasst.

## Revendications

1. Dispositif électronique souple comprenant :
un premier boîtier (210);
un second boîtier disposé pour effectuer un coulissement dans une première direction ou une seconde direction par rapport au premier boîtier;
un dispositif d'entrainement (530) entraîné pour déplacer le second boîtier par rapport au premier boîtier;
un écran (510) ayant une première zone d'affichage (A1) dans le cas où le second boîtier se déplace dans la première direction par rapport au premier boîtier, l'écran étant étendu jusqu'à la première zone d'affichage (A1) et une seconde zone d'affichage (A2) dans le cas où le second boîtier est déplacé par le dispositif d'entrainement à partir du premier boîtier dans la seconde direction; et
un processeur (550) connecté de manière opérationnelle à l'écran (510) et au dispositif d'entrainement (530),
dans lequel le processeur (550) est configuré pour :
analyser un élément spatial d'un premier espace virtuel dans lequel un avatar doit être exprimé à partir d'une première image de fond d'une taille correspondant à la première zone d'affichage (A1), dans le cas où une zone dans laquelle des informations visuelles sont affichées sur l'écran a la première zone d'affichage (A1) lors de l'exécution du service d'avatar, et sélectionner et fournir, dans la première zone d'affichage (A1), un avatar dans une première posture qui peut être exprimée dans le premier espace virtuel, sur la base de l'élément spatial du premier espace virtuel et des informations caractéristiques de l'avatar,
analyser un élément spatial d'un second espace virtuel à partir d'une seconde image de fond d'une taille correspondant à la première zone d'affichage (A1) et à la seconde zone d'affichage (A2), dans le cas où l'extension de l'écran à partir de la première zone d'affichage (A1) à au moins une partie de la seconde zone d'affichage (A2) est détectée; et
sélectionner et fournir, dans la première zone d'affichage (A1) et la seconde zone d'affichage (A2), au moins l'un d'une fonction de service d'extension et d'un avatar dans une seconde posture qui peut être exprimée dans le second espace virtuel, sur la base de l'élément spatial du second espace virtuel et des informations caractéristiques de l'avatar.

2. Dispositif électronique souple selon la revendication 1, dans lequel la première image de fond comprend une première zone découpée redimensionnée pour correspondre à la première zone d'affichage (A1) à partir d'au moins l'une d'une image réelle acquise par une caméra ou d'une image d'espace de réalité virtuelle rendue, et la seconde image de fond comprend une seconde zone découpée redimensionnée pour correspondre à la première zone d'affichage (A1) et à la seconde zone d'affichage (A2) à partir d'au moins l'une de l'image réelle acquise par la caméra ou de l'image d'espace de réalité virtuelle rendue.

3. Dispositif électronique souple selon l'une quelconque des revendications précédentes, dans lequel les informations caractéristiques comprennent au moins une information parmi la taille des jambes, des bras, du corps et du visage de l'avatar, un mouvement d'avatar, une activité d'animation d'avatar ou une posture d'avatar, et l'élément spatial comprend au moins l'un parmi un sol, un mur, un plafond et un objet, et
dans lequel le processeur (550) est configuré pour :
analyser au moins l'une parmi les dimensions, la surface, la hauteur et la distance de l'élément spatial afin de calculer la surface d'un sol sur lequel l'avatar doit être positionné à partir de l'une de la première image de fond ou de la seconde image de fond; et
déterminer des valeurs d'axe x, d'axe y et d'axe z du premier espace virtuel ou du second espace virtuel en se référant à la surface du sol.

4. Dispositif électronique souple selon l'une quelconque des revendications précédentes, dans lequel le processeur (550) est en outre configuré pour :
sélectionner des contenus d'avatar qui peuvent être exprimés dans le premier espace virtuel, sur la base de l'écran ayant la première zone d'affichage (A1), afin de configurer une première interface utilisateur de service d'avatar, et fournir l'avatar dans la première posture à la première interface utilisateur de service d'avatar; et
sélectionner des contenus d'avatar qui peuvent être exprimés dans le second espace virtuel, sur la base de l'écran étendu à partir de la première zone d'affichage (A1) à au moins une partie de la seconde zone d'affichage (A2), afin de configurer une seconde interface utilisateur de service d'avatar, et fournir l'avatar dans la seconde posture à la seconde interface utilisateur de service d'avatar.

5. Dispositif électronique souple selon la revendication 4, dans lequel le processeur (550) est configuré pour que la seconde interface utilisateur de service d'avatar comprenne une fonction de service d'extension, et la fonction de service d'extension comprend au moins l'une parmi une fonction d'affichage d'avatar différent par laquelle un avatar différent d'un avatar principal est affiché en plus, une fonction de clonage par laquelle un clone de l'avatar principal est fourni, et une fonction d'interaction d'avatar par laquelle une fonction supplémentaire est exécutée via interaction avec un avatar.

6. Dispositif électronique souple selon la revendication 4 ou 5, dans lequel la première interface utilisateur de service d'avatar comprend des éléments de mouvement qui peuvent être exprimés dans le premier espace virtuel, et la seconde interface utilisateur de service d'avatar comprend des éléments de mouvement qui peuvent être exprimés dans le second espace virtuel, et
dans lequel le processeur (550) est en outre configuré pour que, dans le cas où la première interface utilisateur de service d'avatar comprend des éléments de mouvement qui ne peuvent pas être exprimés dans le premier espace virtuel, les éléments de mouvement qui peuvent être exprimés dans le premier espace virtuel et les éléments de mouvement qui ne peuvent pas être exprimés sont traités visuellement de manière différente.

7. Dispositif électronique souple selon l'une quelconque des revendications 4 à 6, dans lequel le processeur (550) est en outre configuré pour que, dans le cas où la première interface utilisateur de service d'avatar comprend des éléments de mouvement qui ne peuvent pas être exprimés dans le premier espace virtuel, des informations indiquant que certains des éléments de mouvement ne peuvent pas être exprimés, ou des informations guidant l'extension de l'écran de la première zone d'affichage (A1) à au moins une partie de la seconde zone d'affichage (A2), sont fournies.

8. Procédé d'opération d'un avatar avec un dispositif électronique souple comprenant un premier boîtier (210) et un second boîtier disposé pour effectuer un coulissement dans une première direction ou une seconde direction par rapport au premier boîtier, le procédé comprenant :
recevoir une demande d'exécution de servie d'avatar via un écran (550) ayant une première zone d'affichage (A1) dans le cas où le second boîtier se déplace dans une première direction par rapport au premier boîtier, l'écran (550) étant étendu jusqu'à la première zone d'affichage (A1) et une seconde zone d'affichage (A2) dans le cas où le second boîtier se déplacé à partir du premier boîtier dans une seconde direction;
analyser un élément spatial d'un premier espace virtuel dans lequel un avatar doit être exprimé à partir d'une première image de fond correspondant à la première zone d'affichage (A1) en réponse à la demande d'exécution de servie d'avatar, dans le cas où une zone dans laquelle des informations visuelles sont affichées sur l'écran a la première zone d'affichage (A1);
sélectionner et afficher, dans la première zone d'affichage (A1), un avatar dans une première posture qui peut être exprimée dans le premier espace virtuel, sur la base de l'élément spatial du premier espace virtuel et des informations caractéristiques de l'avatar;
analyser un élément spatial d'un second espace virtuel à partir d'une seconde image de fond correspondant à la première zone d'affichage (A1) et à la seconde zone d'affichage (A2), dans le cas où l'extension de l'écran à partir de la première zone d'affichage (A1) à au moins une partie de la seconde zone d'affichage (A2) est détectée; et
sélectionner et afficher, dans la première zone d'affichage (A1) et la seconde zone d'affichage (A2), au moins l'un d'une fonction de service d'extension et d'un avatar dans une seconde posture qui peut être exprimée dans le second espace virtuel, sur la base de l'élément spatial du second espace virtuel et des informations caractéristiques de l'avatar.

9. Procédé selon la revendication 8, dans lequel la première image de fond comprend une première zone découpée redimensionnée pour correspondre à la première zone d'affichage (A1) à partir d'au moins l'une d'une image réelle acquise par une caméra ou d'une image d'espace de réalité virtuelle rendue, et la seconde image de fond comprend une seconde zone découpée redimensionnée pour correspondre à la première zone d'affichage (A1) et à la seconde zone d'affichage (A2) à partir d'au moins l'une de l'image réelle acquise par la caméra ou de l'image d'espace de réalité virtuelle rendue.

10. Procédé selon l'une quelconque des revendications 8 ou 9,
dans lequel les informations caractéristiques comprennent au moins une information parmi la taille des jambes, des bras, du corps et du visage de l'avatar, un mouvement d'avatar, une activité d'animation d'avatar ou une posture d'avatar, et l'élément spatial comprend au moins l'un parmi un sol, un mur, un plafond et un objet, et
dans lequel l'analyse d'un élément spatial du premier espace virtuel ou du second espace virtuel comprend en outre : analyser au moins l'une parmi les dimensions, la surface, la hauteur et la distance de l'élément spatial afin de calculer la surface d'un sol sur lequel l'avatar doit être positionné à partir de l'image de fond; et déterminer des valeurs d'axe x, d'axe y et d'axe z du premier espace virtuel ou du second espace virtuel en se référant à la surface du sol.

11. Procédé selon l'une quelconque des revendications 8 à 10,
comprenant en outre :
configurer une première interface utilisateur de service d'avatar en sélectionnant des contenus d'avatar qui peuvent être exprimés dans le premier espace virtuel, sur la base de ce que l'écran soit la première zone d'affichage (A1); et
configurer une seconde interface utilisateur de service d'avatar en sélectionnant des contenus d'avatar qui peuvent être exprimés dans le second espace virtuel, sur la base de ce que l'écran soit étendu à partir de la première zone d'affichage (A1) à au moins une partie de la seconde zone d'affichage (A2).

12. Procédé selon la revendication 11, dans lequel la seconde interface utilisateur de service d'avatar comprend en outre une fonction de service d'extension, et la fonction de service d'extension comprend au moins l'une parmi une fonction d'affichage d'avatar différent par laquelle un avatar différent d'un avatar principal est affiché en plus, une fonction de clonage par laquelle un clone de l'avatar principal est fourni, et une fonction d'interaction d'avatar par laquelle une fonction supplémentaire est exécutée via interaction avec un avatar.

13. Procédé selon l'une quelconque des revendications 11 ou 12, dans lequel la première interface utilisateur de service d'avatar comprend des éléments de mouvement qui peuvent être exprimés dans le premier espace virtuel, et la seconde interface utilisateur de service d'avatar comprend des éléments de mouvement qui peuvent être exprimés dans le second espace virtuel, et
dans lequel dans la configuration d'une première interface utilisateur de service d'avatar, dans le cas où les éléments de mouvement qui ne peuvent pas être exprimés dans le premier espace virtuel sont inclus, les éléments de mouvement qui peuvent être exprimés dans le premier espace virtuel et les éléments de mouvement qui ne peuvent pas être exprimés sont traités visuellement de manière différente.

14. Procédé selon l'une quelconque des revendications 11 à 13, dans lequel la configuration d'une première interface utilisateur de service d'avatar comprend en outre, dans le cas où la première interface utilisateur de service d'avatar comprend des éléments de mouvement qui ne peuvent pas être exprimés dans le premier espace virtuel, des informations indiquant que certains des éléments de mouvement ne peuvent pas être exprimés, ou des informations guidant l'extension de l'écran de la première zone d'affichage (A1) à au moins une partie de la seconde zone d'affichage (A2).
